(19) Europäisches Patentamt
European Patent Office
Office européen des brevets

(11) **EP 4 629 689 A1**

(12) **EUROPEAN PATENT APPLICATION**
published in accordance with Art. 153(4) EPC

(43) Date of publication:
**08.10.2025 Bulletin 2025/41**

(21) Application number: **23910059.7**

(22) Date of filing: **09.12.2023**

(51) International Patent Classification (IPC):
**H04W 24/08** (2009.01)

(52) Cooperative Patent Classification (CPC):
**H04B 17/309; H04B 17/382; H04L 5/00;
H04W 16/28; H04W 24/08; H04W 72/044**

(86) International application number:
**PCT/CN2023/137709**

(87) International publication number:
**WO 2024/140129 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.12.2022 CN 202211697839**

(71) Applicant: **Huawei Technologies Co., Ltd.
Shenzhen, Guangdong 518129 (CN)**

(72) Inventors:
• **GAO, Xinyu
Shenzhen, Guangdong 518129 (CN)**
• **HOU, Yuefeng
Shenzhen, Guangdong 518129 (CN)**
• **YOU, Benyao
Shenzhen, Guangdong 518129 (CN)**

(74) Representative: **Maiwald GmbH
Engineering
Elisenhof
Elisenstrasse 3
80335 München (DE)**

(54) **BEAM MEASUREMENT METHOD AND RELATED APPARATUS**

(57) A beam measurement method and a related apparatus are provided. The method includes: A first network device sends first information and second information to a second network device, where the first information indicates time-frequency resources of N first reference signals and time-frequency resources of K second reference signals; and the second information indicates a first beam weight and M second beam weights, further indicates that a beam of the second network device on the time-frequency resources of the N first reference signals is a beam corresponding to the first beam weight, and further indicates that beams of the second network device on the time-frequency resources of the K second reference signals are respectively beams corresponding to the M second beam weights. The first network device sends third information to the second network device, to indicate a third beam weight, where a beam corresponding to the third beam weight is a beam used by the second network device when the first network device communicates with a terminal device. In this method, a beam management delay of an IRS can be shortened, so that a beam of the IRS is aligned with a UE that needs to be served.

[FIG. 4]

## Description

This application claims priority to Chinese Patent Application No. 202211697839.6, filed with the China National Intellectual Property Administration on December 28, 2022 and entitled "BEAM MEASUREMENT METHOD AND RELATED APPARATUS", which is incorporated herein by reference in its entirety.

TECHNICAL FIELD

This application relates to the field of communication technologies, and in particular, to a beam measurement method and a related apparatus.

BACKGROUND

An intelligent reflecting surface (intelligent reflecting surface, IRS) technology is considered as one of key technologies of a next-generation mobile communication network. Phase distribution on a surface is adjusted, so that an IRS may reflect a signal of a base station (base station, BS) into a needed direction, to implement functions such as channel environment improvement and a change from a non-line of sight (non-line-of-sight, NLoS) to a line of sight (line-of-sight, LoS). In addition, the IRS includes only a passive antenna array and a terminal module that is configured to: receive and parse control signaling of a macro base station, and has very low power consumption and costs. The IRS technology is considered as a more efficient technology for enhancing network coverage and increasing a network capacity in the future.
However, reflection gains of the IRS all come from a large-sized antenna array, and a beam reflected by the IRS usually has a very narrow width. Consequently, a beam management delay of the IRS is very long, and the beam of the IRS cannot be aligned with a terminal device (user equipment, UE) that really needs to be served.

SUMMARY

Embodiments of this application provide a beam measurement method and a related apparatus, to shorten a beam management delay of an IRS, so that a beam of the IRS is aligned with a UE that really needs to be served.
According to a first aspect, an embodiment of this application provides a beam measurement method. The method includes:
A first network device sends first information to a second network device, where the first information indicates time-frequency resources of N first reference signals and time-frequency resources of K second reference signals, N is an integer greater than or equal to 1, and K is an integer greater than 1.
The first network device sends second information to the second network device, where the second information indicates a first beam weight and M second beam weights, the second information further indicates that a beam of the second network device on the time-frequency resources of the N first reference signals is a beam corresponding to the first beam weight, the second information further indicates that beams of the second network device on the time-frequency resources of the K second reference signals are respectively beams corresponding to the M second beam weights, and M is an integer greater than 1 and less than or equal to K.
The first network device sends the N first reference signals, and receives N pieces of first channel information corresponding to the N first reference signals.
The first network device sends the K second reference signals, and receives K pieces of second channel information corresponding to the K second reference signals.
The first network device sends third information to the second network device, where the third information indicates a third beam weight, the third beam weight is determined based on the N pieces of first channel information and the K pieces of second channel information, and a beam corresponding to the third beam weight is a beam used by the second network device when the first network device communicates with a terminal device.
In this embodiment of this application, the beam measurement method is provided. The first network device sends the first information and the second information to the second network device. The first information indicates the time-frequency resources of the N first reference signals and the time-frequency resources of the K second reference signals, and the second information indicates the first beam weight and the M second beam weights. The second information further indicates that the beam of the second network device on the time-frequency resources of the N first reference signals is the beam corresponding to the first beam weight, which may also be understood as that the second network device generates, on the time-frequency resources of the N first reference signals based on the indication, the beam corresponding to the first beam weight. The second information further indicates that the beams of the second network device on the time-frequency resources of the K second reference signals are the beams corresponding to the M second beam weights, which may also be understood as that the second network device generates, on the time-frequency resources of the K second reference signals based on the indication, the beams corresponding to the M second beam weights respectively. The first network device sends the N first reference signals and the K second reference signals to the terminal device, where the N first reference signals and the K second reference signals are forwarded by the second network device to the terminal device. When forwarding the N first reference signals and the K second reference signals, the second network device generates, on the time-frequency resources of the N first reference signals based on the indication of the second information, the beam corresponding to the first beam weight, and forwards the N first reference signals to the terminal device by using the beam corresponding to the first beam weight. Similarly, the second network device generates, on the time-frequency resources of the K second reference signals based on the indication of the second information, the beams corresponding to the M second beam weights, and forwards the K second reference signals to the terminal device by using the beams corresponding to the M second beam weights. Correspondingly, the first network device receives the N pieces of first channel information corresponding to the N first reference signals and the K pieces of second channel information corresponding to the K second reference signals that are reported by the terminal device. The first network device may determine the third beam weight based on the received N pieces of first channel information and the received K pieces of second channel information, and send, to the second network device, the third information including the third beam weight. After receiving the third information, the second network device may generate, when the first network device performs service communication with the terminal device, the beam corresponding to the third beam weight, to assist in the service communication between the first network device and the terminal device.

In this embodiment of this application, after receiving the first information and the second information, the second network device generates, on the time-frequency resources of the N first reference signals, the beam corresponding to the first beam weight. It may be understood that in this case, the second network device is switched to an idle (IDLE) state, and the beam that is generated by the second network device on the time-frequency resources of the N first reference signals and that corresponds to the first beam weight is an omnidirectional scattered beam that does not point to any direction, and is used to forward the N first reference signals. Therefore, it can be ensured that the terminal device can obtain clean information about a transmission channel between the first network device and the terminal device through measurement, for example, channel state information (channel state information, CSI).

In this embodiment of this application, after receiving the first information and the second information, the second network device generates, on the time-frequency resources of the K second reference signals, the beams corresponding to the M second beam weights. It may be understood that in this case, the beams that correspond to the M second beam weights and that are generated by the second network device are beams with specific directions, and the second network device switches to M corresponding beams with specific directions on the time-frequency resources of the K second reference signals respectively, to forward the K second reference signals, so that all terminal devices in a cell may perform synchronization beam measurement, thereby avoiding a problem that a beam measurement delay multiplies as a quantity of terminal devices increases. In addition, a transmission channel between the first network device and the terminal device and another transmission channel forwarded by a transit device can be suppressed as much as possible, thereby avoiding a problem of inaccurate beam decision.

In this embodiment of this application, the second network device may be a device, for example, an IRS or a relay node, configured to forward information.

In this embodiment of this application, the first information, the second information, and/or the third information may be carried in different fields of a same packet, or may be respectively carried in different packets. This is not limited in this embodiment of this application.

In this embodiment of this application, the first network device delivers the indication information to the second network device, to indicate the time-frequency resources of the N first reference signals, the time-frequency resources of the K second reference signals, the first beam weight, and the M second beam weights. The time-frequency resources of the N first reference signals and the time-frequency resources of the K second reference signals may be indicated by delivering the first information, and the first beam weights and the M second beam weights may be indicated by delivering the second information; or the time-frequency resources of the N first reference signals and the first beam weight may be indicated by delivering the first indication information, and the time-frequency resources of the K second reference signals and the M second beam weights may be indicated by delivering the second indication information. This is not limited in this embodiment of this application.

In this embodiment of this application, the first network device indicates the second network device to generate, on the time-frequency resources of the N first reference signals, the omnidirectional scattered beam that corresponds to the first beam weight and that does not point to any direction, to forward the N first reference signals, and indicates the second network device to generate, on the time-frequency resources of the K second reference signals, the beams with the specific directions corresponding to the M second beam weights, to forward the K second reference signals. This can shorten a beam management delay of the second network device.

In a possible implementation, the second information includes information about an A×B-dimensional first weight matrix, and the first beam weight is determined based on the information about the A×B-dimensional first weight matrix, where A is a quantity of horizontal transmit ports of the second network device, B is a quantity of vertical transmit ports of the second network device, any element in the A×B-dimensional first weight matrix has limited P values, and P is an integer greater than or equal to 1; or

the second information includes indication information, indicating that the first beam weight is preconfigured information.

In an implementation of this application, the possible implementation of determining the first beam weight is provided. Specifically, the second information includes the information about the A×B-dimensional first weight matrix, and the first beam weight may be determined based on the information about the A×B-dimensional first weight matrix. In this case, the second information indicates the first beam weight by using the information about the A×B-dimensional first weight matrix included in the second information. Alternatively, the first beam weight may be preconfigured information. In this case, the second information may indicate the preconfigured information about the first beam weight by using indication information such as an index.

In a possible implementation, a beam gain of the beam corresponding to the first beam weight is less than a first threshold.

In this implementation of this application, the possible specific implementation of the beam corresponding to the first beam weight is provided. Specifically, the beam gain of the beam corresponding to the first beam weight is less than the first threshold. The first threshold is not a fixed value, and may be adjusted based on different application scenarios, to obtain the beam that corresponds to the first beam weight and whose beam gain meets a condition. A core function of the N first reference signals is to enable the terminal device to obtain clean information about a direct transmission channel between the first network device and the terminal device through measurement, which is compared with information that is about a transmission channel (namely, a reflection channel first network device-second network device-terminal device) and that is forwarded by the second network device between the first network device and the terminal device, to determine: ① whether the reflection channel introduced by the second network device brings a gain to the terminal device; and ② if there is the gain, a beam in which direction of the second network device brings a highest gain to the terminal device. Therefore, at a time domain resource location of the N first reference signals sent by the first network device, it is expected that impact of the second network device is minimized. In this case, the second network device may generate an omnidirectional scattered/invalid beam that does not point to any direction, to achieve this objective. According to this embodiment of this application, the beam gain of the beam corresponding to the first beam weight is limited to be less than the first threshold, so that impact of the second network device on the time domain resource location of the N first reference signals can be reduced, and it can be ensured that the terminal device can obtain the clean information about the direct transmission channel between the first network device and the terminal device through measurement, for example, CSI.

In a possible implementation, any one of the M second beam weights corresponds to a time-frequency resource of at least one second reference signal.

In this implementation of this application, the possible specific implementation of a correspondence between the second beam weight and the second reference signal is provided. Specifically, any one of the M second beam weights corresponds to the time-frequency resource of the at least one of the K second reference signals. In this case, the beams that correspond to the M second beam weights and that are generated by the second network device are beams with specific directions, the specific directions of the beams respectively correspond to the time-frequency resources of the K second reference signals, and the beams with the specific directions are used to respectively forward the K second reference signals. According to this embodiment of this application, the second network device may switch to the corresponding M beams with the specific directions on the time-frequency resources of the K second reference signals respectively, to forward the K second reference signals, thereby shortening a beam management delay of the second network device, so that the beam of the second network device is aligned with the terminal device that really needs to be served.

In a possible implementation, the second information includes information about M A×B-dimensional second weight matrices, and the M second beam weights are determined based on the information about the M A×B-dimensional second weight matrices, where A is a quantity of horizontal transmit ports of the second network device, B is a quantity of vertical transmit ports of the second network device, any element in the A×B-dimensional second weight matrix has limited P values, and P is an integer greater than or equal to 1;

the second information includes M groups of weight information, and the M second beam weights are determined based on the M groups of weight information, where any one group of the M groups of weight information includes information about L spatial-domain bases and information about L weighting coefficients corresponding to the L spatial-domain bases, and L is an integer greater than 1; or

the second information includes indication information, indicating that the M second beam weights are preconfigured information.

In an implementation of this application, the possible implementation of determining the M second beam weights is provided. Specifically, the second information includes the information about the M A×B-dimensional second weight matrices, the M second beam weights may be determined based on the information about the M A×B-dimensional second weight matrices. In this case, the second information indicates the M second beam weights by using the information about the M A×B-dimensional second weight matrices included in the second information respectively. Alternatively, the second information includes the M groups of weight information, any one group of the M groups of weight information includes the information about the L spatial-domain bases and the information about the L weighting coefficients corresponding to the L spatial-domain bases, and the M second beam weights may be determined based on the M groups of weight information. In this case, the second information indicates the M second beam weights by using the M groups of weight information included in the second information respectively. Alternatively, the M second beam weights may be preconfigured information. In this case, the second information may indicate the preconfigured information about the M second beam weights by using indication information such as an index.

In a possible implementation, the second information includes M groups of weight information, where M1 groups of the M groups of weight information include information about L spatial-domain bases and information about L weighting coefficients corresponding to the L spatial-domain bases, M-M1 groups of the M groups of weight information include the information about L weighting coefficients, and L is an integer greater than 1.

In this implementation of this application, the possible implementation of determining the M second beam weights is provided. Specifically, the second information includes the M groups of weight information, the M1 groups of the M groups of weight information include the information about the L spatial-domain bases and the information about the L weighting coefficients corresponding to the L spatial-domain bases, the M-M1 groups of the M groups of weight information include the information about the L weighting coefficients, and the M second beam weights may be determined based on the M groups of weight information. In this case, the second information indicates the M second beam weights by using the M groups of weight information included in the second information respectively. According to this embodiment of this application, the first network device delivers the M groups of weight information, where the M1 groups of weight information include the information about the base locations and the information about the weighting coefficients, the M-M1 groups of weight information include only the information about the weighting coefficients, and the information about the base locations is derived from the information about the base locations in the M1 groups of weight information, so that overheads of delivering the measurement beam weights can be reduced.

In a possible implementation, beam gains of the beams corresponding to the M second beam weights in L directions are greater than a second threshold.

In this implementation of this application, the possible specific implementation of the beams corresponding to the M second beam weights is provided. Specifically, the beam gains of the beams corresponding to the M second beam weights in the L directions are greater than the second threshold. L in the L directions and L in the L spatial-domain bases represent a same number. The second threshold is not a fixed value, and may be adjusted based on different application scenarios, to obtain the beams that correspond to the M second beam weights and whose beam gains meet a condition. Further, the M second beam weights that meet the foregoing requirement may be obtained through a plurality of times of iterative optimizations in antenna domain and beam domain by using an enhanced Gerchberg-Saxton (EGS) algorithm. Specifically, a target beam domain in the EGS needs to be corrected based on a specific direction requirement of a multi-direction beam. That is, an element corresponding to a direction of the multi-direction beam in a weight matrix in the target beam domain is set to an expected amplitude, and other elements are set to 0. Specifically, assuming that an L-peak beam is generated, there are only L non-zero elements in a weight matrix in a beam domain, and a value of each of the L non-zero elements is $1/\sqrt{L}$. In addition, due to impact of a directivity pattern of an antenna array element of the second network device (the IRS), to obtain a multi-direction beam with a similar beam gain, an expected amplitude in each direction needs to be additionally superposed with $\sqrt{1/\cos\theta}$, where θ represents an angle between the direction and a normal direction of the second network device (the IRS), that is, a value of each non-zero element in the weight matrix in the beam domain is $1/\sqrt{L\cos\theta}$. According to this embodiment of this application, the beam gains of the beams corresponding to the M second beam weights in the L directions are limited to be greater than the second threshold, so that the multi-direction beam whose beam gain meets a condition and that has the similar gain may be obtained.

In a possible implementation, a correlation between any two of the L spatial-domain bases is less than a third threshold.

In this implementation of this application, the possible specific implementation of the correlation between the spatial-domain bases is provided. Specifically, the correlation between the any two of the L spatial-domain bases is less than the third threshold. The third threshold is not a fixed value, and may be adjusted based on different application scenarios, to obtain the L spatial-domain bases whose correlation between the spatial-domain bases meets a condition. According to this embodiment of this application, the correlation between the any two of the L spatial-domain bases is limited to be less than the third threshold, so that mutual impact between different spatial-domain bases can be avoided, and a more accurate second beam weight can be obtained.

In a possible implementation, the L weighting coefficients include L amplitudes and L phases, where a value range of the L amplitudes is $[1/\sqrt{2},\ 1]$, and the L phases have limited P values.

In this implementation of this application, the possible specific implementation of the L weighting coefficients is provided. Specifically, the L weighting coefficients include the L amplitudes and the L phases, where the value range of the L amplitudes is $[1/\sqrt{2}, 1]$, and the L phases have the limited P values. Because the second network device (the IRS) is sensitive to the phases, the L phases may be quantized by using the limited P values. For the amplitudes, because an angle between an emergent direction of the second network device (the IRS) and a normal line is not greater than 60°, the value range of the L amplitudes is $\sqrt{1/\cos\theta} \in [1/\sqrt{2}, 1]$. Therefore, the L amplitudes may be quantized in a uniform quantization manner. According to this embodiment of this application, an amplitude and a phase of a non-zero coefficient in beam domain may be quantized, to obtain a more accurate second beam weight.

In a possible implementation, the first information, the second information, and/or the third information are/is carried in at least one of the following:

a radio resource control RRC message, a medium access control control element MAC CE, downlink control information DCI, or a physical downlink shared channel PDSCH.

In an implementation of this application, the possible specific implementation of sending the information is provided. Specifically, the first information, the second information, and the third information may be sent by using one or more of the radio resource control (radio resource control, RRC) message, the medium access control control element (medium access control control element, MAC CE), the downlink control information (downlink control information, DCI), and the physical downlink shared channel (physical downlink shared channel, PDSCH).

According to a second aspect, an embodiment of this application provides a beam measurement method. The method includes:

A second network device receives first information sent by a first network device, where the first information indicates time-frequency resources of N first reference signals and time-frequency resources of K second reference signals, N is an integer greater than or equal to 1, and K is an integer greater than 1.

The second network device receives second information sent by the first network device, where the second information indicates a first beam weight and M second beam weights, the second information further indicates that a beam of the second network device on the time-frequency resources of the N first reference signals is a beam corresponding to the first beam weight, the second information further indicates that beams of the second network device on the time-frequency resources of the K second reference signals are respectively beams corresponding to the M second beam weights, and M is a positive integer greater than 1 and less than or equal to K.

The second network device receives third information sent by the first network device, where the third information indicates a third beam weight, the third beam weight is determined based on N pieces of first channel information corresponding to the N first reference signals and K pieces of second channel information corresponding to the K second reference signals, and a beam corresponding to the third beam weight is a beam used by the second network device when the first network device communicates with a terminal device.

In this embodiment of this application, the beam measurement method is provided. The second network device receives the first information and the second information that are sent by the first network device. The first information indicates the time-frequency resources of the N first reference signals and the time-frequency resources of the K second reference signals, and the second information indicates the first beam weight and the M second beam weights. The second information further indicates that the beam of the second network device on the time-frequency resources of the N first reference signals is the beam corresponding to the first beam weight, which may also be understood as that the second network device generates, on the time-frequency resources of the N first reference signals based on the indication, the beam corresponding to the first beam weight. The second information further indicates that the beams of the second network device on the time-frequency resources of the K second reference signals are the beams corresponding to the M second beam weights, which may also be understood as that the second network device generates, on the time-frequency resources of the K second reference signals based on the indication, the beams corresponding to the M second beam weights respectively. The second network device receives the N first reference signals and the K second reference signals that are sent by the first network device, and forwards the N first reference signals and the K second reference signals to the terminal device. When forwarding the N first reference signals and the K second reference signals, the second network device generates, on the time-frequency resources of the N first reference signals based on the indication of the second information, the beam corresponding to the first beam weight, and forwards the N first reference signals to the terminal device by using the beam corresponding to the first beam weight. Similarly, the second network device generates, on the time-frequency resources of the K second reference signals based on the indication of the second information, the beams corresponding to the M second beam weights, and forwards the K second reference signals to the terminal device by using the beams corresponding to the M second beam weights. Correspondingly, after receiving the N first reference signals and the K second reference signals, the terminal device reports, to the first network device, the N pieces of first channel information corresponding to the N first reference signals and the K pieces of second channel information corresponding to the K second reference signals. The first network device may determine the third beam weight based on the received N pieces of first channel information and the received K pieces of second channel information, and send, to the second network device, the third information including the third beam weight. After receiving the third information, the second network device may generate, when the first network device performs service communication with the terminal device, the beam corresponding to the third beam weight, to assist in the service communication between the first network device and the terminal device.

In this embodiment of this application, after receiving the first information and the second information, the second network device generates, on the time-frequency resources of the N first reference signals, the beam corresponding to the first beam weight. It may be understood that in this case, the second network device is switched to an idle (IDLE) state, and the beam that is generated by the second network device on the time-frequency resources of the N first reference signals and that corresponds to the first beam weight is an omnidirectional scattered beam that does not point to any direction, and is used to forward the N first reference signals. Therefore, it can be ensured that the terminal device can obtain clean information about a transmission channel between the first network device and the terminal device through measurement, for example, channel state information (channel state information, CSI).

In this embodiment of this application, after receiving the first information and the second information, the second network device generates, on the time-frequency resources of the K second reference signals, the beams corresponding to the M second beam weights. It may be understood that in this case, the beams that correspond to the M second beam weights and that are generated by the second network device are beams with specific directions, and the second network device switches to M corresponding beams with specific directions on the time-frequency resources of the K second reference signals respectively, to forward the K second reference signals, so that all terminal devices in a cell may perform synchronization beam measurement, thereby avoiding a problem that a beam measurement delay multiplies as a quantity of terminal devices increases. In addition, a transmission channel between the first network device and the terminal device and another transmission channel forwarded by a transit device can be suppressed as much as possible, thereby avoiding a problem of inaccurate beam decision.

In this embodiment of this application, the second network device may be a device, for example, an IRS or a relay node, configured to forward information.

In this embodiment of this application, the first information, the second information, and/or the third information may be carried in different fields of a same packet, or may be respectively carried in different packets. This is not limited in this embodiment of this application.

In this embodiment of this application, the second network device receives the indication information delivered by the first network device, where the indication information indicates the time-frequency resources of the N first reference signals, the time-frequency resources of the K second reference signals, the first beam weight, and the M second beam weights. The time-frequency resources of the N first reference signals and the time-frequency resources of the K second reference signals may be indicated by receiving the first information, and the first beam weights and the M second beam weights may be indicated by receiving the second information; or the time-frequency resources of the N first reference signals and the first beam weight may be indicated by receiving the first indication information, and the time-frequency resources of the K second reference signals and the M second beam weights may be indicated by receiving the second indication information. This is not limited in this embodiment of this application.

In this embodiment of this application, the first network device indicates the second network device to generate, on the time-frequency resources of the N first reference signals, the omnidirectional scattered beam that corresponds to the first beam weight and that does not point to any direction, to forward the N first reference signals, and indicates the second network device to generate, on the time-frequency resources of the K second reference signals, the beams with the specific directions corresponding to the M second beam weights, to forward the K second reference signals. This can shorten a beam management delay of the second network device.

In a possible implementation, the second information includes information about an A×B-dimensional first weight matrix, and the first beam weight is determined based on the information about the A×B-dimensional first weight matrix, where A is a quantity of horizontal transmit ports of the second network device, B is a quantity of vertical transmit ports of the second network device, any element in the A×B-dimensional first weight matrix has limited P values, and P is an integer greater than or equal to 1; or

the second information includes indication information, indicating that the first beam weight is preconfigured information.

In an implementation of this application, the possible implementation of determining the first beam weight is provided. Specifically, the second information includes the information about the A×B-dimensional first weight matrix, and the first beam weight may be determined based on the information about the A×B-dimensional first weight matrix. In this case, the second information indicates the first beam weight by using the information about the A×B-dimensional first weight matrix included in the second information. Alternatively, the first beam weight may be preconfigured information. In this case, the second information may indicate the preconfigured information about the first beam weight by using indication information such as an index.

In a possible implementation, a beam gain of the beam corresponding to the first beam weight is less than a first threshold.

In this implementation of this application, the possible specific implementation of the beam corresponding to the first beam weight is provided. Specifically, the beam gain of the beam corresponding to the first beam weight is less than the first threshold. The first threshold is not a fixed value, and may be adjusted based on different application scenarios, to obtain the beam that corresponds to the first beam weight and whose beam gain meets a condition. A core function of the N first reference signals is to enable the terminal device to obtain clean information about a direct transmission channel between the first network device and the terminal device through measurement, which is compared with information that is about a transmission channel (namely, a reflection channel first network device-second network device-terminal device) and that is forwarded by the second network device between the first network device and the terminal device, to determine: ① whether the reflection channel introduced by the second network device brings a gain to the terminal device; and ② if there is the gain, a beam in which direction of the second network device brings a highest gain to the terminal device. Therefore, at a time domain resource location of the N first reference signals sent by the first network device, it is expected that impact of the second network device is minimized. In this case, the second network device may generate an omnidirectional scattered/invalid beam that does not point to any direction, to achieve this objective. According to this embodiment of this application, the beam gain of the beam corresponding to the first beam weight is limited to be less than the first threshold, so that impact of the second network device on the time domain resource location of the N first reference signals can be reduced, and it can be ensured that the terminal device can obtain the clean information about the direct transmission channel between the first network device and the terminal device through measurement, for example, CSI.

In a possible implementation, any one of the M second beam weights corresponds to a time-frequency resource of at least one second reference signal.

In this implementation of this application, the possible specific implementation of a correspondence between the second beam weight and the second reference signal is provided. Specifically, any one of the M second beam weights corresponds to the time-frequency resource of the at least one of the K second reference signals. In this case, the beams that correspond to the M second beam weights and that are generated by the second network device are beams with specific directions, the specific directions of the beams respectively correspond to the time-frequency resources of the K second reference signals, and the beams with the specific directions are used to respectively forward the K second reference signals. According to this embodiment of this application, the second network device may switch to the corresponding M beams with the specific directions on the time-frequency resources of the K second reference signals respectively, to forward the K second reference signals, thereby shortening a beam management delay of the second network device.

In a possible implementation, the second information includes information about M A×B-dimensional second weight matrices, and the M second beam weights are determined based on the information about the M A×B-dimensional second weight matrices, where A is a quantity of horizontal transmit ports of the second network device, B is a quantity of vertical transmit ports of the second network device, any element in the A×B-dimensional second weight matrix has limited P values, and P is an integer greater than or equal to 1; or

the second information includes M groups of weight information, and the M second beam weights are determined based on the M groups of weight information, where any one group of the M groups of weight information includes information about L spatial-domain bases and information about L weighting coefficients corresponding to the L spatial-domain bases, and L is an integer greater than 1; or

the second information includes indication information, indicating that the M second beam weights are preconfigured information.

In an implementation of this application, the possible implementation of determining the M second beam weights is provided. Specifically, the second information includes the information about the M A×B-dimensional second weight matrices, the M second beam weights may be determined based on the information about the M A×B-dimensional second weight matrices. In this case, the second information indicates the M second beam weights by using the information about the M A×B-dimensional second weight matrices included in the second information respectively. Alternatively, the second information includes the M groups of weight information, any one group of the M groups of weight information includes the information about the L spatial-domain bases and the information about the L weighting coefficients corresponding to the L spatial-domain bases, and the M second beam weights may be determined based on the M groups of weight information. In this case, the second information indicates the M second beam weights by using the M groups of weight information included in the second information respectively. Alternatively, the M second beam weights may be preconfigured information. In this case, the second information may indicate the preconfigured information about the M second beam weights by using indication information such as an index.

In a possible implementation, the second information includes M groups of weight information, where M1 groups of the M groups of weight information include information about L spatial-domain bases and information about L weighting coefficients corresponding to the L spatial-domain bases, M-M1 groups of the M groups of weight information include the information about L weighting coefficients, and L is an integer greater than 1.

In this implementation of this application, the possible implementation of determining the M second beam weights is provided. Specifically, the second information includes the M groups of weight information, the M1 groups of the M groups of weight information include the information about the L spatial-domain bases and the information about the L weighting coefficients corresponding to the L spatial-domain bases, the M-M1 groups of the M groups of weight information include the information about the L weighting coefficients, and the M second beam weights may be determined based on the M groups of weight information. In this case, the second information indicates the M second beam weights by using the M groups of weight information included in the second information respectively. According to this embodiment of this application, the first network device delivers the M groups of weight information, where the M1 groups of weight information include the information about the base locations and the information about the weighting coefficients, the M-M1 groups of weight information include only the information about the weighting coefficients, and the information about the base locations is derived from the information about the base locations in the M1 groups of weight information, so that overheads of delivering the measurement beam weights can be reduced.

In a possible implementation, beam gains of the beams corresponding to the M second beam weights in L directions are greater than a second threshold.

In this implementation of this application, the possible specific implementation of the beams corresponding to the M second beam weights is provided. Specifically, the beam gains of the beams corresponding to the M second beam weights in the L directions are greater than the second threshold. L in the L directions and L in the L spatial-domain bases represent a same number. The second threshold is not a fixed value, and may be adjusted based on different application scenarios, to obtain the beams that correspond to the M second beam weights and whose beam gains meet a condition. Further, the M second beam weights that meet the foregoing requirement may be obtained through a plurality of times of iterative optimizations in antenna domain and beam domain by using an EGS algorithm. Specifically, a target beam domain in the EGS needs to be corrected based on a specific direction requirement of a multi-direction beam. That is, an element corresponding to a direction of the multi-direction beam in a weight matrix in the target beam domain is set to an expected amplitude, and other elements are set to 0. Specifically, assuming that an L-peak beam is generated, there are only L non-zero elements in a weight matrix in a beam domain, and a value of each of the L non-zero elements is $1/\sqrt{L}$. In addition, due to impact of a directivity pattern of an antenna array element of the second network device (the IRS), to obtain a multi-direction beam with a similar beam gain, an expected amplitude in each direction needs to be additionally superposed with $\sqrt{1/\cos\theta}$, where θ represents an angle between the direction and a normal direction of the second network device (the IRS), that is, a value of each non-zero element in the weight matrix in the beam domain is $1/\sqrt{L\cos\theta}$. According to this embodiment of this application, the beam gains of the beams corresponding to the M second beam weights in the L directions are limited to be greater than the second threshold, so that the multi-direction beam whose beam gain meets a condition and that has the similar gain may be obtained.

In a possible implementation, a correlation between any two of the L spatial-domain bases is less than a third threshold.

In this implementation of this application, the possible specific implementation of the correlation between the spatial-domain bases is provided. Specifically, the correlation between the any two of the L spatial-domain bases is less than the third threshold. The third threshold is not a fixed value, and may be adjusted based on different application scenarios, to obtain the L spatial-domain bases whose correlation between the spatial-domain bases meets a condition. According to this embodiment of this application, the correlation between the any two of the L spatial-domain bases is limited to be less than the third threshold, so that mutual impact between different spatial-domain bases can be avoided, and a more accurate second beam weight can be obtained.

In a possible implementation, the L weighting coefficients include L amplitudes and L phases, where a value range of the L amplitudes is $[1/\sqrt{2},\ 1]$, and the L phases have limited P values.

In this implementation of this application, the possible specific implementation of the L weighting coefficients is provided. Specifically, the L weighting coefficients include the L amplitudes and the L phases, where the value range of the L amplitudes is $[1/\sqrt{2},\ 1]$, and the L phases have the limited P values. Because the second network device (the IRS) is sensitive to the phases, the L phases may be quantized by using the limited P values. For the amplitudes, because an angle between an emergent direction of the second network device (the IRS) and a normal line is not greater than 60°, the value range of the L amplitudes is $\sqrt{1/\cos\theta} \in [1/\sqrt{2}, 1]$. Therefore, the L amplitudes may be quantized in a uniform quantization manner. According to this embodiment of this application, an amplitude and a phase of a non-zero coefficient in beam domain may be quantized, to obtain a more accurate second beam weight.

In a possible implementation, the first information, the second information, and/or the third information are/is carried in at least one of the following:

a radio resource control RRC message, a medium access control control element MAC CE, downlink control information DCI, or a physical downlink shared channel PDSCH.

In an implementation of this application, the possible specific implementation of sending the information is provided. Specifically, the first information, the second information, and the third information may be sent by using one or more of the radio resource control (radio resource control, RRC) message, the medium access control control element (medium access control control element, MAC CE), the downlink control information (downlink control information, DCI), and the physical downlink shared channel (physical downlink shared channel, PDSCH).

According to a third aspect, an embodiment of this application provides a beam measurement method. The method includes:

A terminal device receives N first reference signals, and sends N pieces of first channel information corresponding to the N first reference signals, where N is an integer greater than or equal to 1.

The terminal device receives K second reference signals, and sends K pieces of second channel information corresponding to the K second reference signals, where K is an integer greater than 1.

A beam on time-frequency resources of the N first reference signals is a beam corresponding to a first beam weight, beams on time-frequency resources of the K second reference signals are respectively beams corresponding to M second beam weights, and M is an integer greater than 1 and less than or equal to K.

In a possible implementation, the first beam weight is determined based on information about $A \times B$-dimensional first weight matrix, where A is a quantity of horizontal transmit ports of the second network device, B is a quantity of vertical transmit ports of the second network device, any element in the $A \times B$-dimensional first weight matrix has limited P values, and P is an integer greater than or equal to 1; or

the first beam weight is preconfigured information.

In a possible implementation, a beam gain of the beam corresponding to the first beam weight is less than a first threshold.

In a possible implementation, any one of the M second beam weights corresponds to a time-frequency resource of at least one second reference signal.

In a possible implementation, the M second beam weights are determined based on information about M $A \times B$-dimensional second weight matrices, where A is a quantity of horizontal transmit ports of the second network device, B is a quantity of vertical transmit ports of the second network device, any element in the $A \times B$-dimensional second weight matrix has limited P values, and P is an integer greater than or equal to 1;

the M second beam weights are determined based on M groups of weight information, where any one group of the M groups of weight information includes information about L spatial-domain bases and information about L weighting coefficients corresponding to the L spatial-domain bases, and L is an integer greater than 1; or

the M second beam weights are preconfigured information.

In a possible implementation, the M second beam weights are determined based on M groups of weight information, where M1 groups of the M groups of weight information include information about L spatial-domain bases and information about L weighting coefficients corresponding to the L spatial-domain bases, M-M1 groups of the M groups of weight information include the information about L weighting coefficients, and L is an integer greater than 1.

In a possible implementation, beam gains of the beams corresponding to the M second beam weights in L directions are greater than a second threshold.

In a possible implementation, a correlation between any two of the L spatial-domain bases is less than a third threshold.

In a possible implementation, the L weighting coefficients include L amplitudes and L phases, where a value range of the L amplitudes is $\left[1/\sqrt{2}, \; 1\right]$, and the L phases have limited P values.

For technical effects achieved by the third aspect and any possible implementation of the third aspect, refer to the descriptions of the technical effects corresponding to the first aspect or the second aspect and the corresponding implementations of the first aspect or the second aspect.

According to a fourth aspect, an embodiment of this application provides a communication apparatus. The apparatus includes a module or a unit configured to perform the method according to any one of the first aspect to the third aspect.

In a possible design, the apparatus includes:

a transceiver unit, configured to send first information to a second network device, where the first information indicates time-frequency resources of N first reference signals and time-frequency resources of K second reference signals, N is an integer greater than or equal to 1, and K is an integer greater than 1.

The transceiver unit is further configured to send second information to the second network device, where the second information indicates a first beam weight and M second beam weights, the second information further indicates that a beam of the second network device on the time-frequency resources of the N first reference signals is a beam corresponding to the first beam weight, the second information further indicates that beams of the second network device on the time-frequency resources of the K second reference signals are respectively beams corresponding to the M second beam weights, and M is an integer greater than 1 and less than or equal to K.

The transceiver unit is further configured to: send the N first reference signals, and receive N pieces of first channel information corresponding to the N first reference signals.

The transceiver unit is further configured to: send the K second reference signals, and receive K pieces of second channel information corresponding to the K second reference signals.

The transceiver unit is further configured to send third information to the second network device, where the third information indicates a third beam weight, the third beam weight is determined based on the N pieces of first channel information and the K pieces of second channel information, and a beam corresponding to the third beam weight is a beam used by the second network device when the communication apparatus communicates with a terminal device.

In a possible implementation, the apparatus further includes:

a processing unit, configured to determine the third beam weight based on the N pieces of first channel information and the K pieces of second channel information.

In a possible implementation, the second information includes information about an A×B-dimensional first weight matrix, and the first beam weight is determined based on the information about the A×B-dimensional first weight matrix, where A is a quantity of horizontal transmit ports of the second network device, B is a quantity of vertical transmit ports of the second network device, any element in the A×B-dimensional first weight matrix has limited P values, and P is an integer greater than or equal to 1; or

the second information includes indication information, indicating that the first beam weight is preconfigured information.

In a possible implementation, a beam gain of the beam corresponding to the first beam weight is less than a first threshold.

In a possible implementation, any one of the M second beam weights corresponds to a time-frequency resource of at least one second reference signal.

In a possible implementation, the second information includes information about M A×B-dimensional second weight matrices, and the M second beam weights are determined based on the information about the M A×B-dimensional second weight matrices, where A is a quantity of horizontal transmit ports of the second network device, B is a quantity of vertical transmit ports of the second network device, any element in the A×B-dimensional second weight matrix has limited P values, and P is an integer greater than or equal to 1;

the second information includes M groups of weight information, and the M second beam weights are determined based on the M groups of weight information, where any one group of the M groups of weight information includes information about L spatial-domain bases and information about L weighting coefficients corresponding to the L spatial-domain bases, and L is an integer greater than 1; or

the second information includes indication information, indicating that the M second beam weights are preconfigured information.

In a possible implementation, the second information includes M groups of weight information, where M1 groups of the M groups of weight information include information about L spatial-domain bases and information about L weighting coefficients corresponding to the L spatial-domain bases, M-M1 groups of the M groups of weight information include the information about L weighting coefficients, and L is an integer greater than 1.

In a possible implementation, beam gains of the beams corresponding to the M second beam weights in L directions are greater than a second threshold.

In a possible implementation, a correlation between any two of the L spatial-domain bases is less than a third threshold.

In a possible implementation, the L weighting coefficients include L amplitudes and L phases, where a value range of the L amplitudes is $\left[1/\sqrt{2},\ 1\right]$, and the L phases have limited P values.

In a possible implementation, the first information, the second information, and/or the third information are/is carried in at least one of the following:

a radio resource control RRC message, a medium access control control element MAC CE, downlink control information DCI, or a physical downlink shared channel PDSCH.

For technical effects achieved by the fourth aspect and any possible implementation of the fourth aspect, refer to the descriptions of the technical effects corresponding to the first aspect and the corresponding implementations of the first aspect.

In another possible design, the apparatus includes:

a transceiver unit, configured to receive first information sent by a first network device, where the first information indicates time-frequency resources of N first reference signals and time-frequency resources of K second reference signals, N is an integer greater than or equal to 1, and K is an integer greater than 1.

The transceiver unit is further configured to receive second information sent by the first network device, where the second information indicates a first beam weight and M second beam weights, the second information further indicates that a beam of the communication apparatus on the time-frequency resources of the N first reference signals is a beam corresponding to the first beam weight, the second information further indicates that beams of the communication apparatus on the time-frequency resources of the K second reference signals are respectively beams corresponding to the M second beam weights, and M is a positive integer greater than 1 and less than or equal to K.

The transceiver unit is further configured to receive third information sent by the first network device, where the third information indicates a third beam weight, the third beam weight is determined based on N pieces of first channel information corresponding to the N first reference signals and K pieces of second channel information corresponding to the K second reference signals, and a beam corresponding to the third beam weight is a beam used by the communication apparatus when the first network device communicates with a terminal device.

In a possible implementation, the apparatus further includes:

a processing unit, configured to generate, on the time-frequency resources of the N first reference signals, the beam corresponding to the first beam weight.

The processing unit is further configured to generate, on the time-frequency resources of the K second reference signals, the beams corresponding to the M second beam weights.

In a possible implementation, the processing unit is further configured to generate, when the first network device communicates with the terminal device, the beam corresponding to the third beam weight.

In a possible implementation, the second information includes information about an $A \times B$-dimensional first weight matrix, and the first beam weight is determined based on the information about the $A \times B$-dimensional first weight matrix, where A is a quantity of horizontal transmit ports of the communication apparatus, B is a quantity of vertical transmit ports of the communication apparatus, any element in the $A \times B$-dimensional first weight matrix has limited P values, and P is an integer greater than or equal to 1; or

the second information includes indication information, indicating that the first beam weight is preconfigured information.

In a possible implementation, a beam gain of the beam corresponding to the first beam weight is less than a first threshold.

In a possible implementation, any one of the M second beam weights corresponds to a time-frequency resource of at least one second reference signal.

In a possible implementation, the second information includes information about M $A \times B$-dimensional second weight matrices, and the M second beam weights are determined based on the information about the M $A \times B$-dimensional second weight matrices, where A is a quantity of horizontal transmit ports of the communication apparatus, B is a quantity of vertical transmit ports of the communication apparatus, any element in the $A \times B$-dimensional second weight matrix has limited P values, and P is an integer greater than or equal to 1;

the second information includes M groups of weight information, and the M second beam weights are determined based on the M groups of weight information, where any one group of the M groups of weight information includes information about L spatial-domain bases and information about L weighting coefficients corresponding to the L spatial-domain bases, and L is an integer greater than 1; or

the second information includes indication information, indicating that the M second beam weights are preconfigured information.

In a possible implementation, the second information further includes M groups of weight information, where M1 groups of the M groups of weight information include information about L spatial-domain bases and information about L weighting coefficients corresponding to the L spatial-domain bases, M-M1 groups of the M groups of weight information include the information about L weighting coefficients, and L is an integer greater than 1.

In a possible implementation, beam gains of the beams corresponding to the M second beam weights in L directions are greater than a second threshold.

In a possible implementation, a correlation between any two of the L spatial-domain bases is less than a third threshold.

In a possible implementation, the L weighting coefficients include L amplitudes and L phases, where a value range of the L amplitudes is $[1/\sqrt{2},\ 1]$, and the L phases have limited P values.

In a possible implementation, the first information, the second information, and/or the third information are/is carried in at least one of the following:

a radio resource control RRC message, a medium access control control element MAC CE, downlink control information DCI, or a physical downlink shared channel PDSCH.

For technical effects achieved by the fourth aspect and any possible implementation of the fourth aspect, refer to the descriptions of the technical effects corresponding to the second aspect and the corresponding implementations of the second aspect.

In another possible design, the apparatus includes:

a transceiver unit, configured to: receive N first reference signals, and send N pieces of first channel information corresponding to the N first reference signals, where N is an integer greater than or equal to 1.

The transceiver unit is further configured to: receive K second reference signals, and send K pieces of second channel information corresponding to the K second reference signals, where K is an integer greater than 1.

A beam on time-frequency resources of the N first reference signals is a beam corresponding to a first beam weight, beams on time-frequency resources of the K second reference signals are respectively beams corresponding to M second beam weights, and M is an integer greater than 1 and less than or equal to K.

In a possible implementation, the first beam weight is determined based on information about A×B-dimensional first weight matrix, where A is a quantity of horizontal transmit ports of the second network device, B is a quantity of vertical transmit ports of the second network device, any element in the A×B-dimensional first weight matrix has limited P values, and P is an integer greater than or equal to 1; or
the first beam weight is preconfigured information.

In a possible implementation, a beam gain of the beam corresponding to the first beam weight is less than a first threshold.

In a possible implementation, any one of the M second beam weights corresponds to a time-frequency resource of at least one second reference signal.

In a possible implementation, the M second beam weights are determined based on information about M A×B-dimensional second weight matrices, where A is a quantity of horizontal transmit ports of the second network device, B is a quantity of vertical transmit ports of the second network device, any element in the A×B-dimensional second weight matrix has limited P values, and P is an integer greater than or equal to 1;

the M second beam weights are determined based on M groups of weight information, where any one group of the M groups of weight information includes information about L spatial-domain bases and information about L weighting coefficients corresponding to the L spatial-domain bases, and L is an integer greater than 1; or
the M second beam weights are preconfigured information.

In a possible implementation, the M second beam weights are determined based on M groups of weight information, where M1 groups of the M groups of weight information include information about L spatial-domain bases and information about L weighting coefficients corresponding to the L spatial-domain bases, M-M1 groups of the M groups of weight information include the information about L weighting coefficients, and L is an integer greater than 1.

In a possible implementation, beam gains of the beams corresponding to the M second beam weights in L directions are greater than a second threshold.

In a possible implementation, a correlation between any two of the L spatial-domain bases is less than a third threshold.

In a possible implementation, the L weighting coefficients include L amplitudes and L phases, where a value range of the L amplitudes is $[1/\sqrt{2}, \, 1]$, and the L phases have limited P values.

For technical effects achieved by the fourth aspect and any possible implementation of the fourth aspect, refer to the descriptions of the technical effects corresponding to the third aspect and the corresponding implementations of the third aspect.

According to a fifth aspect, an embodiment of this application provides a communication apparatus. The communication apparatus includes a processor. The processor is coupled to a memory, and may be configured to execute instructions in the memory, to implement the method according to any one of the first aspect to the third aspect and the possible implementations of the first aspect to the third aspect. Optionally, the communication apparatus further includes the memory. Optionally, the communication apparatus further includes a communication interface, and the processor is coupled to the communication interface.

According to a sixth aspect, an embodiment of this application provides a communication apparatus, including a logic circuit and a communication interface. The communication interface is configured to: receive information or send information. The logic circuit is configured to: receive information or send information through the communication interface, so that the communication apparatus performs the method according to any one of the first aspect to the third aspect and the possible implementations of the first aspect to the third aspect.

According to a seventh aspect, an embodiment of this application provides a computer-readable storage medium. The computer-readable storage medium is configured to store a computer program (which may also be referred to as code or instructions). When the computer program runs on a computer, the method according to any one of the first aspect to the third aspect and the possible implementations of the first aspect to the third aspect is implemented.

According to an eighth aspect, an embodiment of this application provides a computer program product. The computer program product includes a computer program (which may also be referred to as code or instructions). When the computer program runs, a computer is enabled to perform the method according to any one of the first aspect to the third aspect and the possible implementations of the first aspect to the third aspect.

According to a ninth aspect, an embodiment of this application provides a chip. The chip includes a processor. The processor is configured to execute instructions. When the processor executes the instructions, the chip is enabled to perform the method according to any one of the first aspect to the third aspect and the possible implementations of the first aspect to the third aspect. Optionally, the chip further includes a communication interface, and the communication interface is configured to: receive a signal or send a signal.

According to a tenth aspect, an embodiment of this application provides a communication system. The communication system includes at least one of the communication apparatus according to the fourth aspect, the communication apparatus according to the fifth aspect, the communication apparatus according to the sixth aspect, or the chip according to the ninth aspect.

According to an eleventh aspect, an embodiment of this application provides a communication system. The communication system includes a first network device, a second network device, and/or a terminal device. The first network device is configured to perform the method according to any one of the first aspect and the possible implementations of the first aspect, the second network device is configured to perform the method according to any one of the second aspect and the possible implementations of the second aspect, and the terminal device is configured to perform the method according to any one of the third aspect and the possible implementations of the third aspect.

In addition, in a process of performing the method according to any one of the first aspect to the third aspect and the possible implementations of the first aspect to the third aspect, a process of sending information and/or receiving information in the foregoing method may be understood as a process of outputting information by a processor and/or a process of receiving input information by the processor. When outputting the information, the processor may output the information to a transceiver (or a communication interface or a sending module), so that the transceiver transmits the information. After the information is output by the processor, other processing may further need to be performed on the information before the information arrives at the transceiver. Similarly, when the processor receives the input information, the transceiver (or the communication interface or the sending module) receives the information, and inputs the information into the processor. Further, after the transceiver receives the information, other processing may need to be performed on the information before the information is input into the processor.

Based on the foregoing principle, for example, sending information in the foregoing method may be understood as outputting information by the processor. For another example, receiving information may be understood as receiving input information by the processor.

Optionally, operations such as transmission, sending, and receiving related to the processor may be more usually understood as operations such as output, receiving, and input of the processor, unless otherwise specified, or provided that the operations do not contradict actual functions or internal logic of the operations in related descriptions.

Optionally, in a process of performing the method according to any one of the first aspect to the third aspect and the possible implementations of the first aspect to the third aspect, the processor may be a processor specially configured to perform these methods, or may be a processor, for example, a general-purpose processor, that performs these methods by executing computer instructions in a memory. The memory may be a non-transitory (non-transitory) memory, for example, a read-only memory (Read-Only Memory, ROM). The memory and the processor may be integrated on a same chip, or may be separately disposed on different chips. A type of the memory and a manner of disposing the memory and the processor are not limited in embodiments of this application.

In a possible implementation, at least one memory is located outside an apparatus.

In another possible implementation, at least one memory is located in an apparatus.

In still another possible implementation, some memories in at least one memory are located in an apparatus, and the other memories are located outside the apparatus.

In this application, the processor and the memory may alternatively be integrated into one device. In other words, the processor and the memory may alternatively be integrated together.

In this embodiment of this application, the first network device indicates the second network device to generate, on the time-frequency resources of the N first reference signals, the omnidirectional scattered beam that corresponds to the first beam weight and that does not point to any direction, to forward the N first reference signals, and indicates the second network device to generate, on the time-frequency resources of the K second reference signals, the beams with the specific directions corresponding to the M second beam weights, to forward the K second reference signals. This can shorten a beam management delay of the second network device, so that the beam of the second network device is aligned with the terminal device that really needs to be served.

BRIEF DESCRIPTION OF DRAWINGS

To describe technical solutions in embodiments of this application more clearly, the following briefly describes the accompanying drawings needed for describing embodiments of this application. Apparently, the accompanying drawings described below show merely some embodiments of this application, and a person of ordinary skill in the art may still derive other drawings from these accompanying drawings without creative efforts.

FIG. 1 is a diagram of a communication system according to an embodiment of this application;
FIG. 2 is a diagram of a communication system according to an embodiment of this application;
FIG. 3 is a diagram of beam measurement according to an embodiment of this application;
FIG. 4 is a schematic flowchart of a beam measurement method according to an embodiment of this application;
FIG. 5 is a schematic flowchart of a beam measurement method according to an embodiment of this application;
FIG. 6 is a diagram of multi-direction beam measurement according to an embodiment of this application;
FIG. 7 is a diagram of generating a multi-direction beam weight according to an embodiment of this application;
FIG. 8 is a diagram of a structure of a communication apparatus according to an embodiment of this application;
FIG. 9 is a diagram of a structure of a communication apparatus according to an embodiment of this application; and
FIG. 10 is a diagram of a structure of a chip according to an embodiment of this application.

DESCRIPTION OF EMBODIMENTS

To make objectives, technical solutions, and advantages of this application clearer, the following describes embodiments of this application with reference to the accompanying drawings in embodiments of this application.

In the specification, claims, or accompanying drawings of this application, the terms "first", "second", and the like are intended only to distinguish between different objects, but are not used to describe a specific sequence. In addition, the terms "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, devices, or the like.

An "embodiment" mentioned in this specification means that a particular feature, structure, or characteristic described with reference to this embodiment may be included in at least one embodiment of this application. The phrase shown in various locations in the specification may not necessarily refer to a same embodiment, and is not an independent or alternative embodiment exclusive from another embodiment. It can be explicitly and implicitly understood by a person skilled in the art that, in embodiments of this application, unless otherwise specified or a logical conflict occurs, terms and/or descriptions in embodiments are consistent and may be mutually referenced, and technical features in different embodiments may be combined based on an internal logical relationship thereof, to form a new embodiment.

It should be understood that, in this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate that only A exists, only B exists, and both A and B exist, where A and B may be singular or plural. The character "/" usually indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, "a and b", "a and c", "b and c", or "a, b, and c", where a, b, and c may be singular or plural.

A method provided in this application may be applied to various communication systems, for example, an internet of things (internet of things, IoT) system, a narrowband internet of things (narrowband internet of things, NB-IoT) system, a long term evolution (long term evolution, LTE) system, a 5th generation (5th generation, 5G) communication system, and a new communication system (for example, 6G) emerging in future communication development.

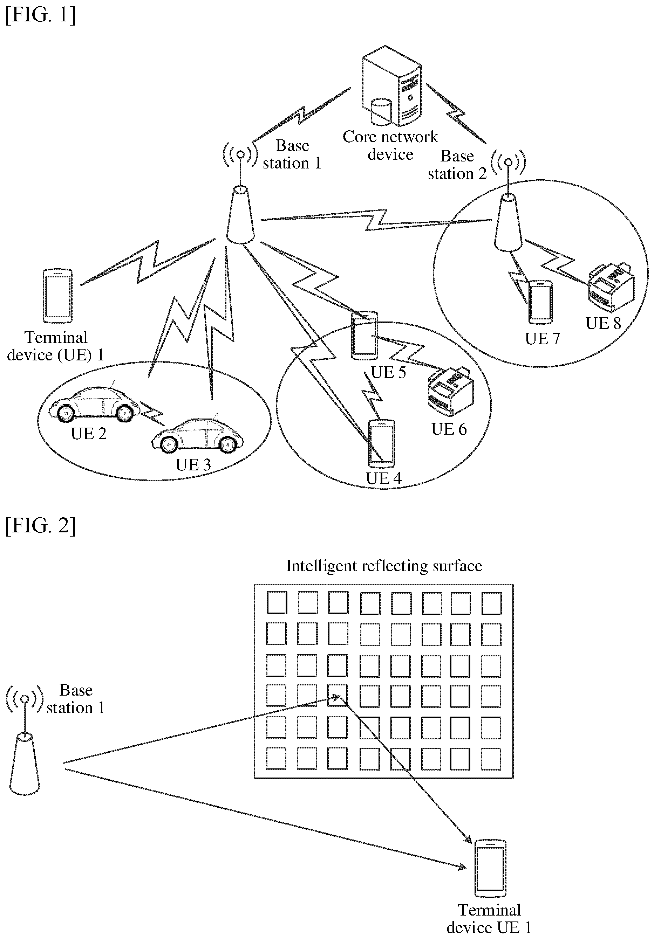

The technical solutions provided in this application may be further applied to machine type communication (machine type communication, MTC), a long term evolution-machine (long term evolution-machine, LTE-M) technology, a device-to-device (device-to-device, D2D) network, a machine-to-machine (machine-to-machine, M2M) network, an internet of things (internet of things, IoT) network, or another network. The IoT network may include, for example, an internet of vehicles. Communication manners in the internet of vehicles system are collectively referred to as vehicle-to-everything (vehicle-to-everything, V2X, where X may represent everything). For example, the V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, vehicle-to-network (vehicle-to-network, V2N) communication, or the like. For example, in FIG. 1 shown below, terminal devices may communicate with each other by using a D2D technology, an M2M technology, a V2X technology, or the like.

FIG. 1 is a diagram of a communication system according to an embodiment of this application.

As shown in FIG. 1, the communication system may include at least one access network device and at least one terminal device.

The access network device and the terminal device are separately described as follows.

For example, the access network device may be a next-generation NodeB (next-generation NodeB, gNB), a next-generation evolved NodeB (next-generation evolved NodeB, ng-eNB), or an access network device in future 6G communication. The access network device may be any device with a wireless transceiver function, and includes but is not limited to the base station described above. The base station may alternatively be a base station in a future communication system such as a 6th generation communication system. Optionally, the access network device may be an access node, a wireless relay node, a wireless backhaul node, or the like in a wireless local area network (wireless fidelity, Wi-Fi) system. Optionally, the access network device may be a radio controller in a cloud radio access network (cloud radio access network, CRAN) scenario. Optionally, the access network device may be a wearable device, a vehicle-mounted device, or the like. Optionally, the access network device may be a small cell, a transmission reception point (transmission reception point, TRP) (which may also be referred to as a transmission point), or the like. It may be understood that the access network device may alternatively be a base station or the like in a future evolved public land mobile network (public land mobile network, PLMN).

In some deployments, the base station (for example, the gNB) may include a central unit (central unit, CU) and a distributed unit (distributed unit, DU). To be specific, functions of a base station in an access network are divided, some functions of the base station are deployed on a CU, and remaining functions are deployed on a DU. In addition, a plurality of DUs share one CU. This reduces costs and facilitates network expansion. In some other deployments of the base station, the CU may be further divided into a CU-control plane (control plane, CP), a CU-user plane (user plane, UP), and the like. In still some other deployments of the base station, the base station may alternatively be a radio unit (radio unit, RU), or the like. In still some other deployments of the base station, the base station may alternatively be an open radio access network (open radio access network, ORAN) architecture or the like. A specific type of the base station is not limited in this application. For example, when the base station is of the ORAN architecture, the base station shown in embodiments of this application may be an access network device in an ORAN, a module in the access network device, or the like. In an ORAN system, a CU may also be referred to as an open (open, O)-CU, a DU may also be referred to as an O-DU, a CU-DU may also be referred to as an O-CU-DU, a CU-UP may also be referred to as an O-CU-UP, and an RU may also be referred to as an O-RU.

For ease of description, the following describes the methods in this application by using an example in which the access network device is a base station.

For example, the terminal device may also be referred to as a user equipment (user equipment, UE), a terminal, or the like. The terminal device is a device with a wireless transceiver function, and may be deployed on land, including an indoor device or an outdoor device, a handheld device, a wearable device, or a vehicle-mounted device; or may be deployed on a water surface, for example, on a ship; or may be deployed in air, for example, on an airplane, a balloon, or a satellite. The terminal device may be a mobile phone (mobile phone), a tablet (Pad), a computer with a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. It may be understood that the terminal device may alternatively be a terminal device in a future 6G network, a terminal device in a future evolved PLMN, or the like.

It may be understood that the terminal device shown in this application may not only include a vehicle (for example, an entire vehicle) in an internet of vehicles, but also include a vehicle-mounted device, a vehicle-mounted terminal, or the like in the internet of vehicles. A specific form of the terminal device used in the internet of vehicles is not limited in this application.

For ease of description, the following describes the methods in this application by using an example in which the terminal device is a UE.

As shown in FIG. 1, the communication system may further include at least one core network device. The core network device is described as follows.

For example, the core network device includes services such as user access control, mobility management, session management, user security authentication, and charging. The core network device includes a plurality of functional units, and may be divided into a control plane function entity and a data plane function entity. An access and mobility management unit (access and mobility management function, AMF) is responsible for user access management, security authentication, and mobility management. A location management unit (location management function, LMF) is responsible for managing and controlling a location service request of a target terminal, and processing location-related information. A user plane unit (user plane function, UPF) is responsible for managing functions such as user plane data transmission and traffic statistics collection.

The communication system shown in FIG. 1 includes one core network device, two base stations, and eight UEs, for example, the core network device shown in FIG. 1, a base station 1, a base station 2, and a UE 1 to a UE 8. In the communication system, the base station 1 may send a downlink signal such as configuration information or downlink control information (downlink control information, DCI) to the UE 1 to the UE 6, and the UE 1 to the UE 6 may send an uplink signal such as an SRS or a physical uplink shared channel (physical uplink shared channel, PUSCH) to the base station 1. The base station 1 may further send a downlink signal to the UE 7 and the UE 8 via the base station 2, and the UE 7 and the UE 8 may send an uplink signal to the base station 1 via the base station 2. The base station 2 may send a downlink signal such as configuration information or DCI to the UE 7 and the UE 8, and the UE 7 and the UE 8 may send an uplink signal such as an SRS or a PUSCH to the base station 2. It may be understood that, for a manner of communication between the UEs, refer to the foregoing descriptions. Details are not described herein again.

It should be understood that FIG. 1 shows an example of one core network device, two base stations, eight UEs, and communication links between communication devices. Optionally, the communication system may include a plurality of base stations, and coverage of each base station may include another quantity of UEs, for example, more or fewer UEs. This is not limited in this application.

A plurality of antennas may be configured for the foregoing communication devices, for example, the core network device, the base station 1, the base station 2, and the UE 1 to the UE 8 in FIG. 1. The plurality of antennas may include at least one transmit antenna for sending a signal, at least one receive antenna for receiving a signal, and the like. A specific structure of each communication device is not limited in embodiments of this application. Optionally, the communication system may further include another network entity, for example, a network controller or a mobility management entity. This is not limited in this embodiment of this application.

It may be understood that the diagram of the communication system shown in FIG. 1 is merely an example. For a diagram of a communication system in another form, refer to a related standard, protocol, or the like. Details are not described herein.

The embodiments shown below are applicable to the communication system shown in FIG. 1, or are applicable to a communication system in another form. This is not described in detail below again.

This application provides a beam measurement method, applied to the field of communication technologies, for example, communication performed by an IRS in a beam measurement process. To describe the solutions of this application more clearly, the following first describes some knowledge related to IRS beam measurement.

An IRS technology is considered as one of key technologies of a next-generation mobile communication network. Phase distribution on a surface is adjusted, so that the IRS may reflect a signal of a base station (base station, BS) in a needed direction, to implement functions such as channel environment improvement and a change from a non-line of sight (non-line-of-sight, NLoS) to a line of sight (line-of-sight, LoS). In addition, the IRS includes only a passive antenna array and a terminal module that is configured to: receive and parse control signaling of a macro base station, and has very low power consumption and costs. The IRS technology is considered as a more efficient technology for enhancing network coverage and increasing a network capacity in the future.

For details, refer to FIG. 2. FIG. 2 is a diagram of a communication system according to an embodiment of this application.

As shown in FIG. 2, the communication system may include at least one access network device, at least one intelligent reflecting surface (IRS), and at least one terminal device.

For descriptions of the access network device and the terminal device, refer to the descriptions in FIG. 1. Details are not described herein again.

The IRS may reflect a signal of a base station 1 to a UE 1 that really needs to be served. Specifically, a function of changing a non-line of sight (base station 1-IRS-UE 1) to a line of sight (base station 1-UE 1) is implemented by adjusting phase distribution on the surface.

It may be understood that the IRS in this embodiment of this application may alternatively be a device configured to forward information, for example, a relay node. This is not limited in this embodiment of this application.

However, because reflection gains of the IRS all come from a large-sized antenna array, a beam reflected by the IRS usually has a very narrow width. An IRS with a size of 1 m×0.5 m at 4.9 GHz is used as an example. A beam that is reflected by the IRS and whose 3 dB beamwidths are about vertical 3.2° and horizontal 6.4°, and covers a vertical plane elevation of 90° to 130° and a horizontal azimuth of -60° to 60° space, and there are more than 200 beams in total. This causes a very long beam management delay of the IRS. Assuming that a periodicity of a channel state information reference signal (channel state information reference signal, CSI-RS)/sounding reference signal (sounding reference signal, SRS) is 20 ms, and a total delay of scanning the 200 beams reaches 200*20 ms=4s, a moving UE may have moved out of a beam that needs to be measured at a beginning, and it means that it is difficult for the IRS to serve a UE that moves at a medium or high speed. In addition, the beam of the IRS cannot be aligned with a UE that really needs to be served in most of time. Consequently, potential coverage and capacity gains of the IRS cannot be obtained.

To resolve a problem that the beams of the IRS cannot be aligned with the UE that really needs to be served due to the very long beam management delay of the IRS, this application provides a beam measurement method, to perform beam measurement through layered sweeping of wide and narrow beams in a high frequency. A core idea of the beam measurement method is to first perform wide beam sweeping, select, from all the wide beams, an optimal beam or a better beam, for example, a beam 1, then perform narrower beam sweeping within coverage of the beam 1, and select an optimal beam or a better beam from the coverage of the beam 1. The rest can be deduced by analogy, until a narrowest beam, a narrower beam, or a beam whose beamwidth meets an expectation requirement is found.

Specifically, an air interface procedure corresponding to the foregoing beam measurement method is as follows.

The UE measures CSI-RSs sent by using BS wide beams, obtains reference signal received powers (reference signal received powers, RSRPs) through measurement, and reports the reference signal received powers. The BS selects a wide beam with a best RSRP based on the RSRPs on all the wide beams, and then continues to send CSI-RSs by using narrower beams within coverage of the wide beam. Correspondingly, the UE continues to perform measurement and report an RSRP. The foregoing process is repeated until the beamwidth meets a requirement.

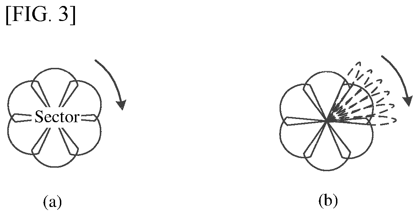

For details, refer to FIG. 3. FIG. 3 is a diagram of beam measurement according to an embodiment of this application.

As shown in FIG. 3, wide beam sweeping is first performed in (a) shown in FIG. 3, to select, from all wide beams, an optimal beam or a better beam, for example, a beam 1, and narrower beam sweeping is then performed within coverage of the beam 1 in (b) shown in FIG. 3, to select an optimal beam or a better beam from the coverage of the beam 1.

However, there are two problems when the foregoing beam measurement method is applied to an IRS system:

(1) In this solution, layered sweeping of wide and narrow beams is performed for a specific UE, and complete sweeping of the wide and narrow beams needs to be performed for each UE. In a worst case, if a plurality of UEs reports different wide beams, a BS needs to scan all narrow beams in a plurality of wide beams. Consequently, a delay increases exponentially. In the IRS system, each IRS usually needs to serve a plurality of UEs. Consequently, beam management overheads multiply as a quantity of UE increases.

(2) In the IRS system, in addition to a reflection channel BS-IRS-UE, there is a direct transmission channel BS-UE. When an IRS beam is broadened, energy of the channel BS-IRS-UE becomes weak, and the IRS beam is easily affected by the direct transmission channel BS-UE. Consequently, beam decision is inaccurate. In addition, there may also be a plurality of other IRSs in a cell. When being broadened, a target IRS beam is more likely to be affected by another IRS channel.

For the foregoing technical problems in a beam measurement process that the beam management overheads and the delay multiply as the quantity of UEs increases, and the beam decision is inaccurate, an embodiment of this application provides a new beam measurement method, to resolve the following problems:

(1) Synchronization beam sweeping may be performed between all UEs and all IRSs in a cell, to resolve the problem that the beam management overheads and the delay increase multiply as the quantity of UEs increases.

(2) The direct transmission channel BS-UE and the another IRS channel are suppressed as much as possible, to resolve the problem that the beam decision is inaccurate.

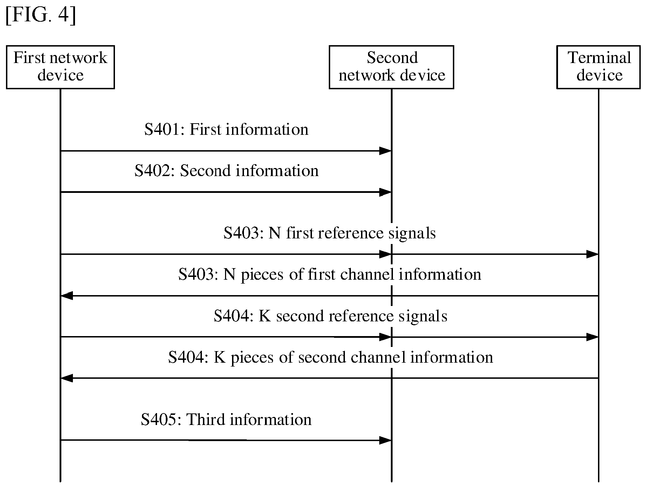

FIG. 4 is a schematic flowchart of a beam measurement method according to an embodiment of this application. The beam measurement method is applied to the field of communication technologies, and the beam measurement method includes but is not limited to the following steps.

S401: A first network device sends first information to a second network device, and correspondingly, the second network device receives the first information sent by the first network device.

The first information indicates time-frequency resources of N first reference signals and time-frequency resources of K second reference signals, N is an integer greater than or equal to 1, and K is an integer greater than 1.

The N first reference signals and the K second reference signals may be CSI-RSs.

It may be understood that the first network device in this embodiment of this application is a device equipped with a processor that may be configured to execute computer-executable instructions, may be an access network device, for example, a base station or a transmission point TRP, may be a server, or may be specifically the access network device in FIG. 1 (including but not limited to any device such as base station 1 and base station 2). The first network device is configured to perform the beam measurement method in this embodiment of this application, to shorten a beam management delay of the second network device, so that a beam of the second network device is aligned with a terminal device that really needs to be served.

It may be understood that the second network device in this embodiment of this application is a device equipped with a processor that may be configured to execute computer-executable instructions, may be an access network device, for example, a base station or a transmission point TRP, may be a device configured to forward information, for example, an intelligent reflecting surface IRS or a relay node, or may be specifically the IRS in FIG. 2. The second network device is configured to perform the beam measurement method in this embodiment of this application, to shorten the beam management delay of the second network device, so that the beam of the second network device is aligned with the terminal device that really needs to be served.

It may be understood that the terminal device in this embodiment of this application is a device equipped with a processor that may be configured to execute computer-executable instructions, may be a handheld terminal (for example, a mobile phone or a tablet computer), may be a vehicle-mounted terminal (for example, a wireless terminal in self driving), or may be specifically the terminal device in FIG. 1 and/or FIG. 2 (including but not limited to any one of the UE 1 to the UE 8). The terminal device participates in performing the beam measurement method in this embodiment of this application, to shorten the beam management delay of the second network device, so that the beam of the second network device is aligned with the terminal device that really needs to be served.

S402: The first network device sends second information to the second network device, and correspondingly, the second network device receives the second information sent by the first network device.

The second information indicates a first beam weight and M second beam weights, and M is an integer greater than 1 and less than or equal to K.

That the second information further indicates that a beam of the second network device on the time-frequency resources of the N first reference signals is a beam corresponding to the first beam weight may also be understood that the second network device generates, on the time-frequency resources of the N first reference signals based on the indication, the beam corresponding to the first beam weight. That the second information further indicates that beams of the second network device on the time-frequency resources of the K second reference signals are respectively beams corresponding to the M second beam weights may also be understood as that the second network device generates, on the time-frequency resources of the K second reference signals based on the indication, the beams corresponding to the M second beam weights respectively.

In this embodiment of this application, after receiving the first information and the second information, the second network device generates, on the time-frequency resources of the N first reference signals, the beam corresponding to the first beam weight.

It may be understood that in this case, the second network device is switched to an idle (IDLE) state, and the beam that is generated by the second network device on the time-frequency resources of the N first reference signals and that corresponds to the first beam weight is an omnidirectional scattered beam that does not point to any direction, and is used to forward the N first reference signals. Therefore, it can be ensured that the terminal device can obtain clean information about a transmission channel between the first network device and the terminal device through measurement, for example, channel state information (CSI).

In this embodiment of this application, after receiving the first information and the second information, the second network device generates, on the time-frequency resources of the K second reference signals, the beams corresponding to the M second beam weights.

It may be understood that in this case, the beams that correspond to the M second beam weights and that are generated by the second network device are beams with specific directions, and the second network device switches to M corresponding beams with specific directions on the time-frequency resources of the K second reference signals respectively, to forward the K second reference signals, so that synchronization beam measurement may be performed between all terminal devices and all second network devices in a cell, thereby avoiding a problem that a beam measurement delay multiplies as a quantity of terminal devices increases. In addition, a transmission channel between the first network device and the terminal device and another transmission channel forwarded by a transit device can be suppressed as much as possible, thereby avoiding a problem of inaccurate beam decision, so that the measurement beam of the second network device is aligned with the terminal device that really needs to be served.

In a possible embodiment, any one of the M second beam weights corresponds to a time-frequency resource of at least one second reference signal.

It may be understood that, in this case, the beams that correspond to the M second beam weights and that are generated by the second network device are the beams with the specific directions, the specific directions of the beams respectively correspond to the time-frequency resources of the K second reference signals, and the beams with the specific beams are used to respectively forward the K second reference signals.

Therefore, the second network device may switch to the corresponding M beams with the specific directions on the time-frequency resources of the K second reference signals respectively, to forward the K second reference signals, thereby shortening a beam management delay of the second network device.

In this embodiment of this application, the first network device indicates the second network device to generate, on the time-frequency resources of the N first reference signals, the omnidirectional scattered beam that corresponds to the first beam weight and that does not point to any direction, to forward the N first reference signals, and indicates the second network device to generate, on the time-frequency resources of the K second reference signals, the beams with the specific directions corresponding to the M second beam weights, to forward the K second reference signals. This can shorten a beam management delay of the second network device, so that the beam of the second network device is aligned with the terminal device that really needs to be served.

In a possible embodiment, the first information and the second information may be carried in different fields of a same packet, or may be respectively carried in different packets. This is not limited in this embodiment of this application.

The following describes several possible cases by using examples.

Case 1:

When the first information and the second information are carried in different fields of the same packet, the first information and the second information may be collectively referred to as indication information.

In this case, the foregoing steps S401 and S402 are performed as a same step.

Specifically, the first network device delivers the indication information to the second network device, to indicate the time-frequency resources of the N first reference signals, the time-frequency resources of the K second reference signals, the first beam weight, and the M second beam weights.

In this case, that the indication information further indicates that the beam of the second network device on the time-frequency resources of the N first reference signals is the beam corresponding to the first beam weight may also be understood that the second network device generates, on the time-frequency resources of the N first reference signals based on the indication, the beam corresponding to the first beam weight. That the indication information further indicates that the beams of the second network device on the time-frequency resources of the K second reference signals are respectively the beams corresponding to the M second beam weights may also be understood as that the second network device generates, on the time-frequency resources of the K second reference signals based on the indication, the beams corresponding to the M second beam weights respectively.

Case 2:

When the first information and the second information are respectively carried in different packets, different steps may be separately performed as shown in the foregoing shown steps S401 and S402.

Specifically, the first network device delivers the first information to the second network device, to indicate the time-frequency resources of the N first reference signals and the time-frequency resources of the K second reference signals; and the first network device delivers the second information to the second network device, to indicate the first beam weight and the M second beam weights.

In this case, that the second information further indicates that the beam of the second network device on the time-frequency resources of the N first reference signals is the beam corresponding to the first beam weight may also be understood that the second network device generates, on the time-frequency resources of the N first reference signals based on the indication, the beam corresponding to the first beam weight. That the second information further indicates that the beams of the second network device on the time-frequency resources of the K second reference signals are respectively the beams corresponding to the M second beam weights may also be understood as that the second network device generates, on the time-frequency resources of the K second reference signals based on the indication, the beams corresponding to the M second beam weights respectively.

Case 3:

When the first information and the second information are respectively carried in different packets, different steps may be separately performed, and are different from the foregoing shown steps S401 and S402.

Specifically, the first network device delivers first indication information to the second network device, to indicate the time-frequency resources of the N first reference signals and the first beam weight; and the first network device delivers second indication information to the second network device, to indicate the time-frequency resources of the K second reference signals and the M second beam weights.

In this case, that the first indication information further indicates that the beam of the second network device on the time-frequency resources of the N first reference signals is the beam corresponding to the first beam weight may also be understood that the second network device generates, on the time-frequency resources of the N first reference signals based on the indication, the beam corresponding to the first beam weight. That the second indication information further indicates that the beams of the second network device on the time-frequency resources of the K second reference signals are respectively the beams corresponding to the M second beam weights may also be understood as that the second network device generates, on the time-frequency resources of the K second reference signals based on the indication, the beams corresponding to the M second beam weights respectively.

It may be understood that the foregoing three cases are merely used as possible examples for description, and should not constitute a limitation on this embodiment of this application. Embodiments obtained based on a supplement or an appropriate variation of the foregoing example cases all fall within the protection scope of this embodiment of this application.

In a possible embodiment, the first beam weight may be indicated in the following manners.

Manner 1:

The second information includes information about A×B-dimensional first weight matrix, where A is a quantity of horizontal transmit ports of the second network device, B is a quantity of vertical transmit ports of the second network device, any element in the A×B-dimensional first weight matrix has limited P values, and P is an integer greater than or equal to 1.

The first beam weight may be determined based on the information about the A×B-dimensional first weight matrix. In this case, the second information indicates the first beam weight by using the information about the A×B-dimensional first weight matrix included in the second information.

Manner 2:

The first beam weight may alternatively be preconfigured information. In this case, the second information may indicate the preconfigured information about the first beam weight by using indication information such as an index.

It may be understood that the foregoing two manners are merely used as possible examples for description, and should not constitute a limitation on this embodiment of this application. Embodiments obtained based on a supplement or an appropriate variation of the foregoing example manners all fall within the protection scope of this embodiment of this application.

Similarly, in a possible embodiment, the M second beam weights may alternatively be indicated in the following manners.

Manner 1:

The second information includes information about M A×B-dimensional second weight matrices, where A is a quantity of horizontal transmit ports of the second network device, B is a quantity of vertical transmit ports of the second network device, any element in the A×B-dimensional second weight matrix has limited P values, and P is an integer greater than or equal to 1.

The M second beam weights may be determined based on the information about the M A×B-dimensional second weight matrices. In this case, the second information separately indicates the M second beam weights by using the information about the M A×B-dimensional second weight matrices included in the second information.

Manner 2:

The second information includes M groups of weight information, where any one group of the M groups of weight information includes information about L spatial-domain bases and information about L weighting coefficients corresponding to the L spatial-domain bases, and L is an integer greater than 1;

The M second beam weights may be determined based on the M groups of weight information. In this case, the second information separately indicates the M second beam weights by using the M groups of weight information included in the second information.

Manner 3:

The second information includes M groups of weight information, where M1 groups of the M groups of weight information include information about L spatial-domain bases and information about L weighting coefficients corresponding to the L spatial-domain bases, M-M1 groups of the M groups of weight information include the information about L weighting coefficients, and L is an integer greater than 1.

The M second beam weights may be determined based on the M groups of weight information. In this case, the second information separately indicates the M second beam weights by using the M groups of weight information included in the second information.

Manner 4:

The M second beam weights may alternatively be preconfigured information. In this case, the second information may indicate the preconfigured information about the M second beam weights by using indication information such as an index.

It may be understood that, compared with Manner 2, in Manner 3, in the M groups of weight information included in the second information, the M1 groups of weight information include the information about the base locations and the information about the weighting coefficients, the M-M1 groups of weight information include only the information about the weighting coefficients, and the information about the base locations may be derived from the information about the base locations in the M1 groups of weight information, so that overheads of delivering the measurement beam weights can be reduced.

It may be understood that the foregoing four manners are merely used as possible examples for description, and should not constitute a limitation on this embodiment of this application. Embodiments obtained based on a supplement or an appropriate variation of the foregoing example manners all fall within the protection scope of this embodiment of this application.

In a possible embodiment, a beam gain of the beam corresponding to the first beam weight is less than a first threshold.

The first threshold is not a fixed value, and may be adjusted based on different application scenarios, to obtain the beam that corresponds to the first beam weight and whose beam gain meets a condition.

A core function of the N first reference signals is to enable the terminal device to obtain clean information about a direct transmission channel between the first network device and the terminal device through measurement, which is compared with information that is about a transmission channel (namely, a reflection channel first network device-second network device-terminal device) and that is forwarded by the second network device between the first network device and the terminal device, to determine: ① whether the reflection channel introduced by the second network device brings a gain to the terminal device; and ② if there is the gain, a beam in which direction of the second network device brings a highest gain to the terminal device. Therefore, at a time domain resource location of the N first reference signals sent by the first network device, it is expected that impact of the second network device is minimized. In this case, the second network device may generate an omnidirectional scattered/invalid beam that does not point to any direction, to achieve this objective.

According to this embodiment of this application, the beam gain of the beam corresponding to the first beam weight is limited to be less than the first threshold, so that impact of the second network device on the time domain resource location of the N first reference signals can be reduced, and it can be ensured that the terminal device can obtain the clean information about the direct transmission channel between the first network device and the terminal device through measurement, for example, CSI.

In a possible embodiment, beam gains of the beams corresponding to the M second beam weights in L directions are greater than a second threshold.

L in the L directions and L in the L spatial-domain bases represent a same number.

The second threshold is not a fixed value, and may be adjusted based on different application scenarios, to obtain the beams that correspond to the M second beam weights and whose beam gains meet a condition.

Further, the M second beam weights that meet the foregoing requirement may be obtained through a plurality of times of iterative optimizations in antenna domain and beam domain by using an enhanced Gerchberg-Saxton (EGS) algorithm. Specifically, a target beam domain in the EGS needs to be corrected based on a specific direction requirement of a multi-direction beam. That is, an element corresponding to a direction of the multi-direction beam in a weight matrix in the target beam domain is set to an expected amplitude, and other elements are set to 0. Specifically, assuming that an L-peak beam is generated, there are only L non-zero elements in a weight matrix in a beam domain, and a value of each of the L non-zero elements is $1/\sqrt{L}$. In addition, due to impact of a directivity pattern of an antenna array element of the second network device (the IRS), to obtain a multi-direction beam with a similar beam gain, an expected amplitude in each direction needs to be additionally superposed with $\sqrt{1/\cos\theta}$, where θ represents an angle between the direction and a normal direction of the second network device (the IRS), that is, a value of each non-zero element in the weight matrix in the beam domain is $1/\sqrt{L\cos\theta}$.

According to this embodiment of this application, the beam gains of the beams corresponding to the M second beam weights in the L directions are limited to be greater than the second threshold, so that the multi-direction beam whose beam gain meets a condition and that has the similar gain may be obtained.

In a possible embodiment, a correlation between any two of the L spatial-domain bases is less than a third threshold.

The third threshold is not a fixed value, and may be adjusted based on different application scenarios, to obtain the L spatial-domain bases whose correlation between the spatial-domain bases meets a condition.

According to this embodiment of this application, the correlation between the any two of the L spatial-domain bases is limited to be less than the third threshold, so that mutual impact between different spatial-domain bases can be avoided, and a more accurate second beam weight can be obtained.

In a possible embodiment, the L weighting coefficients include L amplitudes and L phases.

A value range of the L amplitudes is $[1/\sqrt{2},\ 1]$, and the L phases have limited P values.

Because the second network device (the IRS) is sensitive to the phases, the L phases may be quantized by using the limited P values. For the amplitudes, because an angle between an emergent direction of the second network device (the IRS) and a normal line is not greater than 60°, the value range of the L amplitudes is $\sqrt{1/\cos\theta} \in [1/\sqrt{2}, 1]$. Therefore, the L amplitudes may be quantized in a uniform quantization manner.

According to this embodiment of this application, an amplitude and a phase of a non-zero coefficient in beam domain may be quantized, to obtain a more accurate second beam weight.

S403: The first network device sends the N first reference signals, and receives N pieces of first channel information corresponding to the N first reference signals.

The N first reference signals are forwarded by the second network device to the terminal device.

Correspondingly, after receiving the N first reference signals sent by the first network device, the second network device forwards the N first reference signals to the terminal device.

Correspondingly, after receiving the N first reference signals forwarded by the second network device, the terminal device obtains the N pieces of first channel information through measurement, and reports the N pieces of first channel information to the first network device.

S404: The first network device sends the K second reference signals, and receives K pieces of second channel information corresponding to the K second reference signals.

The K second reference signals are forwarded by the second network device to the terminal device.

Correspondingly, after receiving the K second reference signals sent by the first network device, the second network device forwards the K second reference signals to the terminal device.

Correspondingly, after receiving the K second reference signals forwarded by the second network device, the terminal device obtains the K pieces of second channel information through measurement, and reports the K pieces of second channel information to the first network device.

It may be understood that there is no specific execution sequence between the foregoing steps S403 and S404. Step S403 may be performed before step S404, step S404 may be performed before step S403, or steps S403 and S404 may be simultaneously performed. This is not limited in this application.

It may be understood that, in the foregoing steps S403 and S404:
The first network device sends the N first reference signals and the K second reference signals to the terminal device, where the N first reference signals and the K second reference signals are forwarded by the second network device to the terminal device.

When forwarding the N first reference signals and the K second reference signals, the second network device generates, on the time-frequency resources of the N first reference signals based on the indication of the second information, the beam corresponding to the first beam weight, and forwards the N first reference signals to the terminal device by using the beam corresponding to the first beam weight.

Similarly, the second network device generates, on the time-frequency resources of the K second reference signals based on the indication of the second information, the beams corresponding to the M second beam weights, and forwards the K second reference signals to the terminal device by using the beams corresponding to the M second beam weights.

After receiving the N first reference signals and the K second reference signals that are forwarded by the second network device, the terminal device obtains, through measurement, the N pieces of first channel information corresponding to the N first reference signals and the K pieces of second channel information corresponding to the K second reference signals respectively, reports the N pieces of first channel information and the K pieces of second channel information to the first network device.

Correspondingly, the first network device receives the N pieces of first channel information corresponding to the N first reference signals and the K pieces of second channel information corresponding to the K second reference signals that are reported by the terminal device.

S405: The first network device sends third information to the second network device, and correspondingly, the second network device receives the third information sent by the first network device.

The third information indicates a third beam weight, the third beam weight is determined based on the N pieces of first channel information and the K pieces of second channel information, and a beam corresponding to the third beam weight is a beam used by the second network device when the first network device communicates with the terminal device. It may also be understood as that the second network device generates, based on the indication when the first network device communicates with the terminal device, the beam corresponding to the third beam weight.

Specifically, the first network device may determine the third beam weight based on the received N pieces of first channel information and the received K pieces of second channel information, and send, to the second network device, the third information including the third beam weight.

Correspondingly, after receiving the third information, the second network device may generate, when the first network device performs service communication with the terminal device, the beam corresponding to the third beam weight, to assist in the service communication between the first network device and the terminal device.

Optionally, the first information, the second information, and the third information in steps S401 to S405 may be sent by using one or more of a radio resource control (RRC) message, a medium access control control element (MAC CE), downlink control information (DCI), and a physical downlink shared channel (PDSCH). This is not limited in this embodiment of this application.

In this embodiment of this application, the first network device indicates the second network device to generate, on the time-frequency resources of the N first reference signals, the omnidirectional scattered beam that corresponds to the first beam weight and that does not point to any direction, to forward the N first reference signals, and indicates the second network device to generate, on the time-frequency resources of the K second reference signals, the beams with the specific directions corresponding to the M second beam weights, to forward the K second reference signals. This can shorten a beam management delay of the second network device.

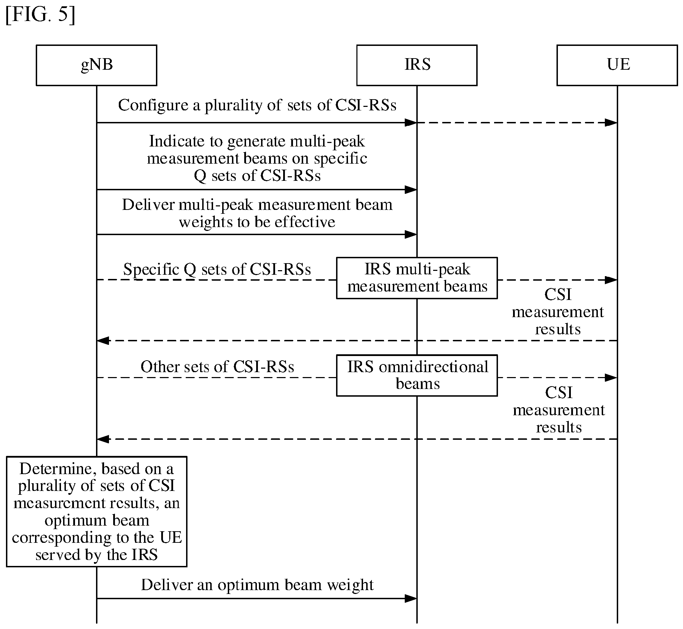

FIG. 5 is a schematic flowchart of a beam measurement method according to an embodiment of this application. It may be understood that steps in this embodiment of this application may be considered as an appropriate variation or supplement to the embodiment in FIG. 4; or it may be understood that the beam measurement method in this embodiment of this application may be considered as an embodiment that can be independently performed. This is not limited in this application. The beam measurement method provided in this embodiment of this application is applied to the field of communication technologies, and the beam measurement method includes but is not limited to the following steps.

A gNB performs the following steps:

(1) Configure a plurality of sets of CSI-RS resources for an IRS and a UE.
(2) Indicate the IRS to generate multi-peak measurement beams on specific Q sets of CSI-RS resources.
(3) Deliver, to the IRS, multi-peak measurement beam weights to be effective.
(4) Send the Q sets of CSI-RSs and other sets of CSI-RSs, and receive a plurality of sets of CSI measurement results reported by the UE.
(5) Determine, based on the plurality of sets of CSI measurement results, an optimum beam corresponding to the UE served by the IRS.
(6) Deliver an optimum beam weight to the IRS.

The IRS performs the following steps:

(1) Receive the plurality of sets of CSI-RS resources delivered by the gNB, and distinguish which Q sets of CSI-RS resources are used for the multi-peak measurement beams.
(2) Receive the multi-peak measurement beam weights to be effective that are delivered by the gNB.
(3) Generate the multi-peak measurement beams on the Q sets of CSI-RS resources, and generate omnidirectional (scattered) beams on the remaining other sets of CSI-RS resources. That is, in this case, the IRS is switched to an idle (IDLE) state.
(4) Receive the optimum beam weight delivered by the gNB.

The UE performs the following step:

(1) Receive the Q sets of CSI-RSs and the other sets of CSI-RSs, and report the plurality of sets of corresponding CSI measurement results to the gNB.

It may be understood that the gNB in this embodiment of this application may correspond to the first network device in FIG. 4, the IRS in this embodiment of this application may correspond to the second network device in FIG. 4, and the UE in this embodiment of this application may correspond to the terminal device in FIG. 4. Therefore, for the gNB, the IRS, and the UE in this embodiment of this application, respectively refer to the descriptions of the first network device, the second network device, and the terminal device in FIG. 4. Details are not described herein again.

It can be learned from the steps separately performed by the gNB, the IRS, and the UE that the following content is mainly included in this embodiment of this application.

First, a solution of configuring and sending a plurality of sets of CSI-RSs is designed.

That is, the gNB configures the plurality of sets of CSI-RSs for the IRS and the UE. The Q sets of CSI-RSs are used for IRS beam measurement. On the corresponding resource, the gNB generates a steering vector pointing to an IRS direction to weight the CSI-RS, and the IRS needs to switch a measurement beam at a corresponding time domain location. The other remaining sets of CSI-RSs are normal CSI-RSs. On the corresponding resource, the CSI-RS is normally transmitted, and the IRS needs to be switched to an idle (IDLE) state at a corresponding time domain location, for example, generates an omnidirectional scattered beam.

Second, an IRS measurement beam solution is designed.

During each time of measurement, the gNB notifies the IRS to generate a specific multi-direction beam. The UE measures CSI of channels of a plurality of multi-direction beams and feeds back CSI measurement results, so that the gNB may finally obtain an optimal direction from the IRS to each UE through detection.

Finally, with reference to beam measurement logic, a method for delivering a beam weight (a multi-direction beam) measured by an IRS is designed, so that downlink resource overheads can be greatly reduced.

The following separately describes the foregoing content.

(1) Configuration and sending of the plurality of sets of CSI-RSs:

The gNB configures the plurality of sets of CSI-RS resources for the IRS and the UE, where the plurality of sets of CSI-RS resources includes: at least one set of conventional CSI-RS resources, where one set of conventional CSI-RS resources includes N CSI-RS resources, and the N CSI-RS resources may correspond to the foregoing N first reference signals; and the Q sets of CSI-RS resources used for the IRS beam measurement, where each set of the Q sets of CSI-RS resources includes K CSI-RS resources, and the K CSI-RS resources may correspond to the foregoing K second reference signals.

The gNB sends at least one set of conventional CSI-RSs in a conventional manner without special processing. For the remaining Q sets of CSI-RS resources, assuming that a $q^{th}$ set of CSI-RS resources is used, the gNB first weights a $q^{th}$ set of CSI-RSs with an outer weight $w_q \in C^{N_T \times 1}$, to generate a beam pointing to a $q^{th}$ IRS direction, and then sends the $q^{th}$ set of CSI-RSs, where $N_T$ represents a quantity of transmit ports of the gNB.

The following describes how the gNB obtains the outer weight $w_q$.

It is assumed that Q IRSs are deployed in a cell. At a beginning, a communication module (1T) on each IRS sends an SRS. An SRS signal that is of a $q^{th}$ IRS and that is received by the gNB may be represented as

$$Y_q = \sqrt{\rho} H_q + I + E \in C^{N_{SC} \times N_T}$$, where $N_{SC}$ represents a quantity of subcarriers for sending the SRS, $N_T$ represents a quantity of receive ports of the gNB, $H_q$ represents an uplink channel from a communication module on the $q^{th}$ IRS to the gNB, I and E respectively represent corresponding interference and noise, and $\sqrt{\rho}$ represents an uplink power control factor.

After receiving $Y_q$, the gNB performs beam domain projection on $Y_q$, to obtain an optimal direction from the gNB to the $q^{th}$ IRS as follows:

$$\left(i_q^*, j_q^*\right) = \arg_{i,j} \max ||Y_q P_{ij}||_F^2$$

$P_{ij}$ represents an oversampled 2D-DFT vector, and is specifically expressed as follows:

$$p_{ij} = \left[u_i \otimes v_j; u_i \otimes v_j\right] \in C^{N_T \times 1}$$

$$u_i = \frac{1}{\sqrt{N_H}} \left[1, e^{j\frac{2\pi i}{O_H N_H}}, \cdots, e^{j\frac{2\pi i(N_H - 1)}{O_H N_H}}\right]$$

$$v_j = \frac{1}{\sqrt{N_V}} \left[1, e^{j\frac{2\pi j}{O_V N_V}}, \cdots, e^{j\frac{2\pi j(N_V - 1)}{O_V N_V}}\right]$$

$N_H$ and $N_V$ respectively represent a quantity of horizontal ports and a quantity of vertical ports on an antenna array of the gNB. Considering $2N_H N_V = N_T$ in dual-polarization, $O_H$ and $O_V$ respectively represent an oversampling multiple of a horizontal beam and an oversampling multiple of a vertical beam.

After $i_q^*, j_q^*$ is obtained, $w_q$ may be expressed as follows:

$$w_q = \left[u_{i_q^*} \otimes v_{j_q^*}; u_{i_q^*} \otimes v_{j_q^*}\right] \in C^{N_T \times 1}, q = 1, \cdots, Q$$

There are mainly two functions of $w_q$: One is to point to the IRS, to ensure that the CSI-RS is mainly rebroadcast through a channel gNB-IRS (q)-UE; and the other is to suppress a direct transmission channel gNB-UE and a channel BS-IRS (n)-UE (n≠q), to avoid interference and improve accuracy of beam detection.

(2) IRS multi-peak beam measurement:

At time domain resource locations at which the gNB sends the at least one set of conventional CSI-RSs, the IRS should be switched to the idle state, for example, generates the scattered beams that do not point to any direction, to ensure that the UE can obtain clean CSI through measurement on the channel gNB-UE. At a time domain resource location at which the gNB sends a CSI-RS used for the beam measurement, each IRS should switch to a corresponding measurement beam.

Specifically, assuming that the time domain resources of the $q^{th}$ set of CSI-RSs are $\{t_q, t_q + T_q, ..., t_q + (K - 1)T_q\}$, where $t_q$ represents a code (symbol) location of the $q^{th}$ set of CSI-RSs within one slot (slot), $T_q$ represents a CSI-RS periodicity, and K indicates that the set of resources is used to send CSI-RSs for K times in total, at time at which the CSI-RS is sent for a $k^{th}$ time, the IRS should switch to a multi-direction beam.

It is assumed that the IRS has a total of 256 candidate narrow beam directions. The following describes a specific procedure of a solution by using eight-direction beam measurement as an example.

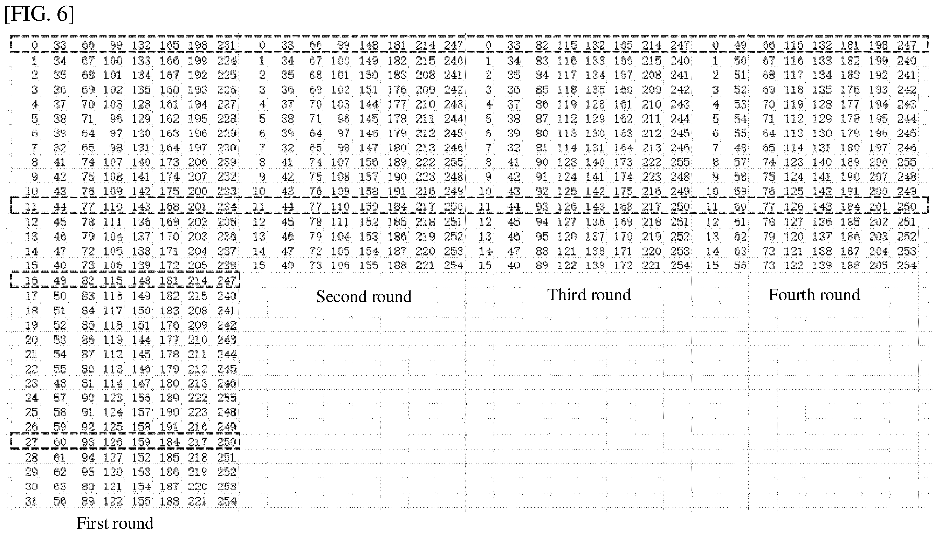

FIG. 6 is a diagram of multi-direction beam measurement according to an embodiment of this application.

As shown in FIG. 6, a total of K=80 times of measurement are needed in the eight-direction beam measurement, 32 times of measurement need to be performed in a first round, 16 times of measurement need to be performed in a second round, 16 times of measurement need to be performed in a third round, and 16 times of measurement need to be performed in a fourth round. Beam directions for each time of measurement are shown in FIG. 6.

For example, in a first time of measurement, a beam pointing to (direction indexes) eight directions {0, 33, 66, 99, 132, 165, 198, 231} needs to be generated. After the first round of 32 times of measurement, reference signal received powers (RSRPs)/channel quality indicators (CQIs) of 32 beams may be finally obtained. A largest RSRP/CQI, for example, in {0, 33, 66, 99, 132, 165, 198, 231} is selected, indicating that an optimal beam direction is between the eight directions. In the second round of measurement, a total of 16 beams are measured, and RSRPs/CQIs in {0, 33, 66, 99, 148, 181, 214, 247} are compared with the RSRPs/CQIs in {0, 33, 66, 99, 132, 165, 198, 231} in the first round. If a difference between the RSRPs/CQIs is small, it is considered that the optimal beam is also in {0, 33, 66, 99, 132, 165, 198, 231}. In this case, an intersection set may be obtained in the first round and the second round, to narrow a range of the optimal beam to {0, 33, 66, 99}. Similarly, in the third round of measurement of 16 beams, if it is found that RSRPs/CQIs in {0, 33, 82, 115, 132, 165, 214, 247} are also similar, the range of the optimal beam may be further narrowed to {0, 33}. By analogy, a final direction of the optimal beam may be obtained in the fourth round of beam measurement.

It may be understood that the foregoing beam measurement procedure is the same for each UE. In other words, an IRS can obtain, through detection, an optimal beam corresponding to each UE only by generating multi-peak beams for 80 times. Therefore, a measurement delay of the IRS does not increase as a quantity of UEs increases. In addition, for a plurality of IRS systems, due to a special design of $w_q$, energy detected by the UE on different CSI-RS resources varies greatly. This is reflected in fed-back RSPRs/CQIs. Therefore, the gNB compares RSRP/CQI feedback on different sets of resources, to determine a specific optimal IRS serving the UE, so that synchronization beam measurement is finally performed between a plurality of IRSs and a plurality of UEs, thereby shortening a delay.

It may be understood that the "optimal beam" mentioned in this application does not necessarily mean a unique beam whose RSRP/CQI is equal to a largest value, but may be a beam whose beam width/direction meets an expected requirement. There may be one or more optimal beams that meet the expected requirement. Specifically, selection may be performed based on different application scenarios. This is not limited in this embodiment of this application.

Similarly, meanings expressed by expressions such as "narrowest", "largest", "best", "optimum", and "worst" mentioned in this application are similar to a meaning of the foregoing "optimal beam". Therefore, details are not described again.

(3) Multi-peak beam weight delivery:

A general idea of the multi-peak beam weight delivery is to design an enhanced Gerchberg-Saxton (EGS) algorithm based on actual amplitude and phase characteristics of array elements of the IRS and combined with a classical Gerchberg-Saxton algorithm in optical imaging, and obtain an ideal multi-direction beam weight through a plurality of times of iterative optimizations in antenna domain and beam domain.

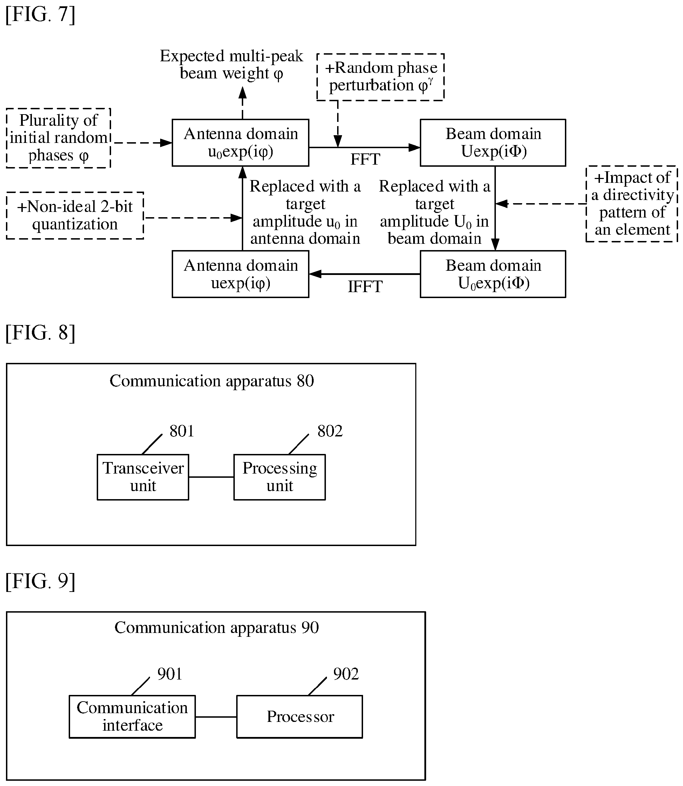

FIG. 7 is a diagram of generating a multi-direction beam weight according to an embodiment of this application.

As shown in FIG. 7, based on a direction requirement of a multi-direction beam, U is corrected to $U_0$. That is, an element corresponding to a direction of the multi-direction beam in U is set to an expected amplitude, and other elements are set to 0. Specifically, assuming that an L-peak beam is generated, there are only L non-zero elements in $U_0$, and a value of each of the L non-zero elements is $1/\sqrt{L}$. In addition, due to impact of a directivity pattern of an array element of an IRS, to obtain a multi-direction beam with a similar gain, an expected amplitude in each direction needs to be additionally superposed with $\sqrt{1/\cos\theta}$, where $\theta$ represents an angle between the direction and a normal direction of the IRS, that is, a value of each non-zero element in $U_0$ is $1/\sqrt{L\cos\theta}$.

In addition, it can be learned from FIG. 7 that a core idea of EGS is to perform iteration in antenna domain and beam domain. In a process of a change from the beam domain to the antenna domain, an essence of the EGS is to multiply several coefficients and corresponding IDFT vectors and then perform summation, to obtain $W_0$ in antenna domain. For example, for an eight-peak beam, there are only eight non-zero elements in $D_0$. Based on a matrix transformation relationship, the following equation is drawn:

$$w_0 = \widetilde{D}_{N_H} B_0 \widetilde{D}_{N_V} \rightarrow \mathrm{vec}(W_0) = \left(\widetilde{D}_{N_V}^T \otimes \widetilde{D}_{N_H}\right)\mathrm{vec}(B_0)$$

It can be learned that an essence of the foregoing calculation process is to select eight corresponding columns from a 2D-IDFT matrix $\widetilde{D}_{N_V}^T \otimes \widetilde{D}_{N_H}$, multiply the eight non-zero elements in $\mathrm{vec}(B_0)$, and then perform summation. The foregoing calculation process is similar to that of a type II codebook in R15. Therefore, the type II codebook may be directly used to deliver an IRS multi-peak beam weight.

In addition, it should be noted that, to avoid mutual impact between bases, it should be ensured that a distance between the selected eight columns (that is, eight directions of the eight-peak beam) is long enough. Mathematically, the following equation is drawn:

$$\left(\left(\widetilde{D}_{N_V}^T \otimes \widetilde{D}_{N_H}\right)_i\right)^H \left(\widetilde{D}_{N_V}^T \otimes \widetilde{D}_{N_H}\right)_j < \gamma, i \neq j$$

Subscripts i and j respectively represent an $i^{th}$ column and a $j^{th}$ column in the 2D-IDFT matrix $\widetilde{D}_{N_V}^T \otimes \widetilde{D}_{N_H}$, $\gamma$ represents a correlation threshold, and smaller $\gamma$ indicates a longer distance between two bases.

An IRS with 1 m×0.5 m at 4.9 GHz is used as an example. First, one direction needs to be selected from 40×20 discrete beam directions, that is, a column corresponding to $\widetilde{D}_{N_V}^T \otimes \widetilde{D}_{N_H}$ is selected, and a total of 10 bits are needed. Then, an amplitude and a phase of a non-zero coefficient in $\mathrm{vec}(B_0)$ need to be quantized. Because the IRS is sensitive to the phase, a phase of each coefficient is quantized by using 8 bits. For the amplitude, because an angle between an emergent direction of the IRS and a normal line is not greater than 60°, a value of the amplitude is $\sqrt{1/\cos\theta} \in \left[1/\sqrt{2}, 1\right]$, and the amplitude may be quantized in a 3-bit uniform quantization manner.

According to the foregoing method, notification overheads needed for notifying an 8-peak beam weight to the IRS are only 336 bits. Details are shown in the following table:

| Multi-peak quantity | Beam location | Phase | Amplitude | Total |
|---|---|---|---|---|
| 8 | 10 bits | 8 bits | 3 bits | 2*8*(10+8+3)=336 bits |

However, because a quantity of beams that need to be measured is also large in the multi-direction beam measurement. For example, overheads of delivering all weights in the foregoing 80 times of measurement are still up to 80*336=26880 bits.

To further reduce overheads, a new weight delivery method may be proposed by using a logical relationship in the multi-direction beam measurement.

For example, as shown in FIG. 6, the beam {0, 33, 66, 99, 148, 181, 214, 247} measured in the second round includes eight directions, which include first four directions of the beam {0, 33, 66, 99, 132, 165, 198, 231} measured in the first round and last four directions of the beam {16, 49, 82, 115, 148, 181, 214, 247} measured in the first round. For other beams in the second round to the fourth round, there is also a same rule.

Therefore, during weight delivery, only beam locations and beam coefficients (phases and amplitudes) need to be delivered for the 32 beams in the first round, and only beam coefficients (phases and amplitudes) need to be delivered for the 48 beams in the second round to the fourth round, so that overheads of the weight delivery are reduced.

Specifically, the overheads may be reduced from the original 26880 bits to 2*32*(8*11+8*10)+2*48*8*11=19200 bits, and are reduced by about 30%.

(4) IRS idle (IDLE) state beam generation:

A core function of a conventional CSI-RS is to obtain clean information about a direct transmission channel gNB-UE, which is compared with information about a reflection channel gNB-IRS-UE, to determine: ① whether the reflection channel introduced by the IRS brings a gain to the UE; and ② if there is the gain, which beam of the IRS brings a highest gain to the UE. Therefore, at a time domain resource location at which the gNB sends the conventional CSI-RS, it is expected that impact of the IRS is minimized. In this case, the IRS may generate a scattered beam/an invalid beam to achieve this objective.

The following describes a possible manner of generating the scattered/invalid beam.

As described in the foregoing EGS algorithm, to generate a multi-peak beam, in step (3), an expected beam domain amplitude coefficient matrix is set to $U_0$, where there are only eight non-zero elements (an eight-peak beam is used as an example).

To generate a scattered beam, the elements in $U_0$ may all be set to a same non-zero value, and energy normalization is performed, that is,

$$U_0(i, j) = 1/\sqrt{N_H \times N_V}$$

Then, a beam weight of the scattered beam of the IRS may be obtained by still using the EGS algorithm.

In addition, in an actual application process, the weight of the scattered beam may be pre-stored in a memory of the IRS. When the gNB indicates a conventional CSI-RS resource, the IRS may automatically generate the scattered beam at a corresponding time domain resource location. Alternatively, the weight of the scattered beam may be directly delivered by the gNB to the IRS. When the gNB indicates a conventional CSI-RS resource, the IRS may automatically generate the scattered beam at a corresponding time domain resource location.

The foregoing describes in detail the methods provided in embodiments of this application. The following provides an apparatus for implementing any one of the methods in embodiments of this application. For example, an apparatus including units (or means) for implementing steps performed by a device in any one of the foregoing methods is provided.

FIG. 8 is a diagram of a structure of a communication apparatus according to an embodiment of this application.

As shown in FIG. 8, the communication apparatus 80 may include a transceiver unit 801 and a processing unit 802. The transceiver unit 801 and the processing unit 802 may be software, hardware, or a combination of software and hardware.

The transceiver unit 801 may implement a sending function and/or a receiving function, and the transceiver unit 801 may also be described as a communication unit. Alternatively, the transceiver unit 801 may be a unit integrating an obtaining unit and a sending unit. The obtaining unit is configured to implement a receiving function, and the sending unit is configured to implement a sending function. Optionally, the transceiver unit 801 may be configured to receive information sent by another apparatus, and may be further configured to send information to the another apparatus.

In a possible design, the communication apparatus 80 may correspond to the first network device in the method embodiments shown in FIG. 4 and FIG. 5. For example, the communication apparatus 80 may be the first network device, or may be a chip in the first network device. The communication apparatus 80 may include units configured to perform operations performed by the first network device in the method embodiments shown in FIG. 4 and FIG. 5. The units in the communication apparatus 80 are separately configured to implement the operations performed by the first network device in the method embodiments shown in FIG. 4 and FIG. 5. The units are described as follows.

A transceiver unit 801 is configured to send first information to a second network device, where the first information indicates time-frequency resources of N first reference signals and time-frequency resources of K second reference signals, N is an integer greater than or equal to 1, and K is an integer greater than 1.

The transceiver unit 801 is further configured to send second information to the second network device, where the second information indicates a first beam weight and M second beam weights, the second information further indicates that a beam of the second network device on the time-frequency resources of the N first reference signals is a beam corresponding to the first beam weight, the second information further indicates that beams of the second network device on the time-frequency resources of the K second reference signals are respectively beams corresponding to the M second beam weights, and M is an integer greater than 1 and less than or equal to K.

The transceiver unit 801 is further configured to: send the N first reference signals, and receive N pieces of first channel information corresponding to the N first reference signals.

The transceiver unit 801 is further configured to: send the K second reference signals, and receive K pieces of second channel information corresponding to the K second reference signals.

The transceiver unit 801 is further configured to send third information to the second network device, where the third information indicates a third beam weight, the third beam weight is determined based on the N pieces of first channel information and the K pieces of second channel information, and a beam corresponding to the third beam weight is a beam used by the second network device when the communication apparatus communicates with a terminal device.

In a possible implementation, the apparatus further includes:

a processing unit 802, configured to determine the third beam weight based on the N pieces of first channel information and the K pieces of second channel information.

In a possible implementation, the second information includes information about an A×B-dimensional first weight matrix, and the first beam weight is determined based on the information about the A×B-dimensional first weight matrix, where A is a quantity of horizontal transmit ports of the second network device, B is a quantity of vertical transmit ports of the second network device, any element in the A×B-dimensional first weight matrix has limited P values, and P is an integer greater than or equal to 1; or

the second information includes indication information, indicating that the first beam weight is preconfigured information.

In a possible implementation, a beam gain of the beam corresponding to the first beam weight is less than a first threshold.

In a possible implementation, any one of the M second beam weights corresponds to a time-frequency resource of at least one second reference signal.

In a possible implementation, the second information includes information about M A×B-dimensional second weight matrices, and the M second beam weights are determined based on the information about the M A×B-dimensional second weight matrices, where A is a quantity of horizontal transmit ports of the second network device, B is a quantity of vertical transmit ports of the second network device, any element in the A×B-dimensional second weight matrix has limited P values, and P is an integer greater than or equal to 1;

> the second information includes M groups of weight information, and the M second beam weights are determined based on the M groups of weight information, where any one group of the M groups of weight information includes information about L spatial-domain bases and information about L weighting coefficients corresponding to the L spatial-domain bases, and L is an integer greater than 1; or
> the second information includes indication information, indicating that the M second beam weights are preconfigured information.

In a possible implementation, the second information includes M groups of weight information, where M1 groups of the M groups of weight information include information about L spatial-domain bases and information about L weighting coefficients corresponding to the L spatial-domain bases, M-M1 groups of the M groups of weight information include the information about L weighting coefficients, and L is an integer greater than 1.

In a possible implementation, beam gains of the beams corresponding to the M second beam weights in L directions are greater than a second threshold.

In a possible implementation, a correlation between any two of the L spatial-domain bases is less than a third threshold.

In a possible implementation, the L weighting coefficients include L amplitudes and L phases, where a value range of the L amplitudes is $\left[1/\sqrt{2},\ 1\right]$, and the L phases have limited P values.

In a possible implementation, the first information, the second information, and/or the third information are/is carried in at least one of the following:

a radio resource control RRC message, a medium access control control element MAC CE, downlink control information DCI, or a physical downlink shared channel PDSCH.

In another possible design, the communication apparatus 80 may correspond to the second network device in the method embodiments shown in FIG. 4 and FIG. 5. For example, the communication apparatus 80 may be the second network device, or may be a chip in the second network device. The communication apparatus 80 may include units configured to perform operations performed by the second network device in the method embodiments shown in FIG. 4 and FIG. 5. The units in the communication apparatus 80 are separately configured to implement the operations performed by the second network device in the method embodiments shown in FIG. 4 and FIG. 5. The units are described as follows.

A transceiver unit 801 is configured to receive first information sent by a first network device, where the first information indicates time-frequency resources of N first reference signals and time-frequency resources of K second reference signals, N is an integer greater than or equal to 1, and K is an integer greater than 1.

The transceiver unit 801 is further configured to receive second information sent by the first network device, where the second information indicates a first beam weight and M second beam weights, the second information further indicates that a beam of the communication apparatus on the time-frequency resources of the N first reference signals is a beam corresponding to the first beam weight, the second information further indicates that beams of the communication apparatus on the time-frequency resources of the K second reference signals are respectively beams corresponding to the M second beam weights, and M is a positive integer greater than 1 and less than or equal to K.

The transceiver unit 801 is further configured to receive third information sent by the first network device, where the third information indicates a third beam weight, the third beam weight is determined based on N pieces of first channel information corresponding to the N first reference signals and K pieces of second channel information corresponding to the K second reference signals, and a beam corresponding to the third beam weight is a beam used by the communication apparatus when the first network device communicates with a terminal device.

In a possible implementation, the apparatus further includes:

a processing unit 802, configured to generate, on the time-frequency resources of the N first reference signals, the beam corresponding to the first beam weight.

The processing unit 802 is further configured to generate, on the time-frequency resources of the K second reference signals, the beams corresponding to the M second beam weights.

In a possible implementation, the processing unit 802 is further configured to generate, when the first network device communicates with the terminal device, the beam corresponding to the third beam weight.

In a possible implementation, the second information includes information about an A×B-dimensional first weight matrix, and the first beam weight is determined based on the information about the A×B-dimensional first weight matrix, where A is a quantity of horizontal transmit ports of the communication apparatus, B is a quantity of vertical transmit ports of the communication apparatus, any element in the A×B-dimensional first weight matrix has limited P values, and P is an integer greater than or equal to 1; or

the second information includes indication information, indicating that the first beam weight is preconfigured information.

In a possible implementation, a beam gain of the beam corresponding to the first beam weight is less than a first threshold.

In a possible implementation, any one of the M second beam weights corresponds to a time-frequency resource of at least one second reference signal.

In a possible implementation, the second information includes information about M A×B-dimensional second weight matrices, and the M second beam weights are determined based on the information about the M A×B-dimensional second weight matrices, where A is a quantity of horizontal transmit ports of the communication apparatus, B is a quantity of vertical transmit ports of the communication apparatus, any element in the A×B-dimensional second weight matrix has limited P values, and P is an integer greater than or equal to 1;

> the second information includes M groups of weight information, and the M second beam weights are determined based on the M groups of weight information, where any one group of the M groups of weight information includes information about L spatial-domain bases and information about L weighting coefficients corresponding to the L spatial-domain bases, and L is an integer greater than 1; or
> the second information includes indication information, indicating that the M second beam weights are preconfigured information.

In a possible implementation, the second information further includes M groups of weight information, where M1 groups of the M groups of weight information include information about L spatial-domain bases and information about L weighting coefficients corresponding to the L spatial-domain bases, M-M1 groups of the M groups of weight information include the information about L weighting coefficients, and L is an integer greater than 1.

In a possible implementation, beam gains of the beams corresponding to the M second beam weights in L directions are greater than a second threshold.

In a possible implementation, a correlation between any two of the L spatial-domain bases is less than a third threshold.

In a possible implementation, the L weighting coefficients include L amplitudes and L phases, where a value range of the L amplitudes is $\left[1/\sqrt{2},\ 1\right]$, and the L phases have limited P values.

In a possible implementation, the first information, the second information, and/or the third information are/is carried in at least one of the following:

a radio resource control RRC message, a medium access control control element MAC CE, downlink control information DCI, or a physical downlink shared channel PDSCH.

In another possible design, the communication apparatus 80 may correspond to the terminal device in the method embodiments shown in FIG. 4 and FIG. 5. For example, the communication apparatus 80 may be the terminal device, or may be a chip in the terminal device. The communication apparatus 80 may include units configured to perform operations performed by the terminal device in the method embodiments shown in FIG. 4 and FIG. 5. The units in the communication apparatus 80 are separately configured to implement the operations performed by the terminal device in the method embodiments shown in FIG. 4 and FIG. 5. The units are described as follows.

A transceiver unit 801 is configured to: receive N first reference signals, and send N pieces of first channel information corresponding to the N first reference signals, where N is an integer greater than or equal to 1.

The transceiver unit 801 is further configured to: receive K second reference signals, and send K pieces of second channel information corresponding to the K second reference signals, where K is an integer greater than 1.

A beam on time-frequency resources of the N first reference signals is a beam corresponding to a first beam weight, beams on time-frequency resources of the K second reference signals are respectively beams corresponding to M second beam weights, and M is an integer greater than 1 and less than or equal to K.

In a possible implementation, the first beam weight is determined based on information about A×B-dimensional first weight matrix, where A is a quantity of horizontal transmit ports of the second network device, B is a quantity of vertical transmit ports of the second network device, any element in the A×B-dimensional first weight matrix has limited P values, and P is an integer greater than or equal to 1; or the first beam weight is preconfigured information.

In a possible implementation, a beam gain of the beam corresponding to the first beam weight is less than a first threshold.

In a possible implementation, any one of the M second beam weights corresponds to a time-frequency resource of at least one second reference signal.

In a possible implementation, the M second beam weights are determined based on information about M A×B-dimensional second weight matrices, where A is a quantity of horizontal transmit ports of the second network device, B is a quantity of vertical transmit ports of the second network device, any element in the A×B-dimensional second weight matrix has limited P values, and P is an integer greater than or equal to 1;

the M second beam weights are determined based on M groups of weight information, where any one group of the M groups of weight information includes information about L spatial-domain bases and information about L weighting coefficients corresponding to the L spatial-domain bases, and L is an integer greater than 1; or the M second beam weights are preconfigured information.

In a possible implementation, the M second beam weights are determined based on M groups of weight information, where M1 groups of the M groups of weight information include information about L spatial-domain bases and information about L weighting coefficients corresponding to the L spatial-domain bases, M-M1 groups of the M groups of weight information include the information about L weighting coefficients, and L is an integer greater than 1.

In a possible implementation, beam gains of the beams corresponding to the M second beam weights in L directions are greater than a second threshold.

In a possible implementation, a correlation between any two of the L spatial-domain bases is less than a third threshold.

In a possible implementation, the L weighting coefficients include L amplitudes and L phases, where a value range of the L amplitudes is $\left[1/\sqrt{2},\ 1\right]$, and the L phases have limited P values.

According to this embodiment of this application, the units in the apparatus shown in FIG. 8 may be separately or all combined into one or more other units, or one (or more) of the units in the apparatus may be further divided into a plurality of units with more detailed functions. In this way, same operations can be implemented without affecting implementation of technical effects of this embodiment of this application. The foregoing units are obtained through division based on logical functions. In actual application, a function of one unit may be implemented by a plurality of units, or functions of a plurality of units are implemented by one unit. In another embodiment of this application, an electronic device may alternatively include another unit. In actual application, the functions may alternatively be implemented with assistance of the another unit, and may be implemented by a plurality of units in collaboration.

It should be noted that, for implementation of each unit, refer to the corresponding descriptions of the method embodiments shown in FIG. 4 and FIG. 5.

In the communication apparatus 80 described in FIG. 8, the first network device indicates the second network device to generate, on the time-frequency resources of the N first reference signals, an omnidirectional scattered beam that corresponds to the first beam weight and that does not point to any direction, to forward the N first reference signals, and indicates the second network device to generate, on the time-frequency resources of the K second reference signals, beams with the specific directions corresponding to the M second beam weights, to forward the K second reference signals. This can shorten a beam management delay of the second network device, so that the beam of the second network device is aligned with the terminal device that really needs to be served.

FIG. 9 is a diagram of a structure of a communication apparatus according to an embodiment of this application.

It should be understood that a communication apparatus 90 shown in FIG. 9 is merely an example. The communication apparatus in this embodiment of this application may further include another component, or include a component with a function similar to that of each component in FIG. 9, or does not necessarily need to include all components in FIG. 9.

The communication apparatus 90 includes a communication interface 901 and at least one processor 902.

The communication apparatus 90 may correspond to any network element or device in a first network device and a second network device. The communication interface 901 is configured to: send and receive a signal, and the at least one processor 902 executes program instructions, to enable the communication apparatus 90 to implement a corresponding procedure of a method performed by a corresponding device in the foregoing method embodiments.

In a possible design, the communication apparatus 90 may correspond to the first network device in the method embodiments shown in FIG. 4 and FIG. 5. For example, the communication apparatus 90 may be the first network device, or may be a chip in the first network device. The communication apparatus 90 may include components configured to perform operations performed by the first network device in the foregoing method embodiments, and the components in the communication apparatus 90 are separately configured to implement the operations performed by the first network device in the foregoing method embodiments. Details may be as follows.

The first network device sends first information to a second network device, where the first information indicates time-frequency resources of N first reference signals and time-frequency resources of K second reference signals, N is an integer greater than or equal to 1, and K is an integer greater than 1.

The first network device sends second information to the second network device, where the second information indicates a first beam weight and M second beam weights, the second information further indicates that a beam of the second network device on the time-frequency resources of the N first reference signals is a beam corresponding to the first beam weight, the second information further indicates that beams of the second network device on the time-frequency resources of the K second reference signals are respectively beams corresponding to the M second beam weights, and M is an integer greater than 1 and less than or equal to K.

The first network device sends the N first reference signals, and receives N pieces of first channel information corresponding to the N first reference signals.

The first network device sends the K second reference signals, and receives K pieces of second channel information corresponding to the K second reference signals.

The first network device sends third information to the second network device, where the third information indicates a third beam weight, the third beam weight is determined based on the N pieces of first channel information and the K pieces of second channel information, and a beam corresponding to the third beam weight is a beam used by the second network device when the first network device communicates with a terminal device.

In another possible design, the communication apparatus 90 may correspond to the second network device in the method embodiments shown in FIG. 4 and FIG. 5. For example, the communication apparatus 90 may be the second network device, or may be a chip in the second network device. The communication apparatus 90 may include components configured to perform operations performed by the second network device in the foregoing method embodiments, and the components in the communication apparatus 90 are separately configured to implement the operations performed by the second network device in the foregoing method embodiments. Details may be as follows.

The second network device receives first information sent by a first network device, where the first information indicates time-frequency resources of N first reference signals and time-frequency resources of K second reference signals, N is an integer greater than or equal to 1, and K is an integer greater than 1.

The second network device receives second information sent by the first network device, where the second information indicates a first beam weight and M second beam weights, the second information further indicates that a beam of the second network device on the time-frequency resources of the N first reference signals is a beam corresponding to the first beam weight, the second information further indicates that beams of the second network device on the time-frequency resources of the K second reference signals are respectively beams corresponding to the M second beam weights, and M is a positive integer greater than 1 and less than or equal to K.

The second network device receives third information sent by the first network device, where the third information indicates a third beam weight, the third beam weight is determined based on N pieces of first channel information corresponding to the N first reference signals and K pieces of second channel information corresponding to the K second reference signals, and a beam corresponding to the third beam weight is a beam used by the second network device when the first network device communicates with a terminal device.

In another possible design, the communication apparatus 90 may correspond to the terminal device in the method embodiments shown in FIG. 4 and FIG. 5. For example, the communication apparatus 90 may be the terminal device, or may be a chip in the terminal device. The communication apparatus 90 may include components configured to perform operations performed by the terminal device in the foregoing method embodiments, and the components in the communication apparatus 90 are separately configured to implement the operations performed by the terminal device in the foregoing method embodiments. Details may be as follows.

The terminal device receives N first reference signals, and sends N pieces of first channel information corresponding to the N first reference signals, where N is an integer greater than or equal to 1.

The terminal device receives K second reference signals, and sends K pieces of second channel information corresponding to the K second reference signals, where K is an integer greater than 1.

A beam on time-frequency resources of the N first reference signals is a beam corresponding to a first beam weight, beams on time-frequency resources of the K second reference signals are respectively beams corresponding to M second beam weights, and M is an integer greater than 1 and less than or equal to K.

In the communication apparatus 90 described in FIG. 9, the first network device indicates the second network device to generate, on the time-frequency resources of the N first reference signals, an omnidirectional scattered beam that corresponds to the first beam weight and that does not point to any direction, to forward the N first reference signals, and indicates the second network device to generate, on the time-frequency resources of the K second reference signals, beams with the specific directions corresponding to the M second beam weights, to forward the K second reference signals. This can shorten a beam management delay of the second network device, so that the beam of the second network device is aligned with the terminal device that really needs to be served.

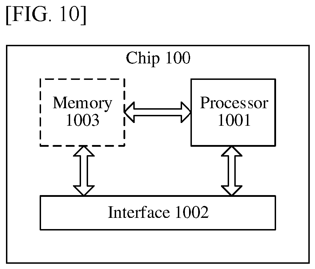

For a case in which the communication apparatus may be a chip or a chip system, refer to a diagram of a structure of a chip shown in FIG. 10.

As shown in FIG. 10, the chip 100 includes a processor 1001 and an interface 1002. There may be one or more processors 1001, and there may be a plurality of interfaces 1002. It should be noted that functions corresponding to the processor 1001 and the interface 1002 may be implemented by using a hardware design, may be implemented by using a software design, or may be implemented by using a combination of software and hardware. This is not limited herein.

Optionally, the chip 100 may further include a memory 1003, and the memory 1003 is configured to store necessary program instructions and data.

In this application, the processor 1001 may be configured to: invoke, from the memory 1003, a program for implementing, on one or more devices or network elements of the first network device, the second network device, and the terminal device, the communication method provided in one or more embodiments of this application, and execute instructions included in the program. The interface 1002 may be configured to output an execution result of the processor 1001. In this application, the interface 1002 may be specifically configured to output messages or information of the processor 1001.

For the beam measurement method provided in one or more embodiments of this application, refer to the embodiments shown in FIG. 4 and FIG. 5. Details are not described herein again.

The processor in this embodiment of this application may be a central processing unit (Central Processing Unit, CPU), or the processor may be another general-purpose processor, a digital signal processor (digital signal processor, DSP), an application specific-integrated circuit (application-specific integrated circuit, ASIC), a field programmable gate array (field programmable gate array, FPGA), another programmable logic device, a discrete gate or a transistor logic device, a discrete hardware component, or the like. The general-purpose processor may be a microprocessor, or the processor may be any conventional processor or the like.

The memory in embodiments of this application is configured to provide storage space, and the storage space may store data such as an operating system and a computer program. The memory includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM).

According to the methods provided in embodiments of this application, an embodiment of this application further provides a computer-readable storage medium. The computer-readable storage medium stores a computer program. When the computer program runs on one or more processors, the methods shown in FIG. 4 and FIG. 5 may be implemented.

According to the methods provided in embodiments of this application, an embodiment of this application further provides a computer program product. The computer program product includes a computer program. When the computer program runs on a processor, the methods shown in FIG. 4 and FIG. 5 may be implemented.

An embodiment of this application further provides a system. The system includes at least one of the communication apparatus 80, the communication apparatus 90, or the chip 100, and is configured to perform steps performed by a corresponding device in any one of the embodiments in FIG. 4 and FIG. 5.

An embodiment of this application further provides a system. The system includes a first network device, a second network device, and/or a terminal device. The first network device is configured to perform steps performed by the first network device in any one of the embodiments in FIG. 4 and FIG. 5. The second network device is configured to perform steps performed by the second network device in any one of the embodiments in FIG. 4 and FIG. 5. The terminal device is configured to perform steps performed by the terminal device in any one of the embodiments in FIG. 4 and FIG. 5.

An embodiment of this application further provides a processing apparatus, including a processor and an interface. The processor is configured to perform the method in any one of the foregoing method embodiments.

It should be understood that the processing apparatus may be a chip. For example, the processing apparatus may be a field programmable gate array (field programmable gate array, FPGA), may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, may be a system on chip (system on chip, SoC), may be a central processor unit (central processor unit, CPU), may be a network processor (network processor, NP), may be a digital signal processing circuit (digital signal processor, DSP), may be a microcontroller unit (microcontroller unit, MCU), and may be a programmable logic device (programmable logic device, PLD) or another integrated chip. The processor may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory in the systems and methods described in this specification includes but is not limited to these memories and any memory of another appropriate type.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid-state drive, SSD)), or the like.

The units in the foregoing apparatus embodiments completely correspond to the electronic devices in the method embodiments, and corresponding modules or units perform corresponding steps. For example, a communication unit (a transceiver) performs receiving or sending steps in the method embodiments, and steps other than sending and receiving may be performed by a processing unit (a processor). For a function of a specific unit, refer to a corresponding method embodiment. There may be one or more processors.

It may be understood that in embodiments of this application, the electronic device may perform some or all of the steps in embodiments of this application. These steps or operations are merely examples. In embodiments of this application, other operations or variations of various operations may be performed. In addition, the steps may be performed in a sequence different from a sequence presented in embodiments of this application, and not all the operations in embodiments of this application may be necessarily to be performed.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

**In** several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separate, and components displayed as units may or may not be physical units, may be located in one position, or may be distributed on a plurality of network units. Some or all of the units may be selected based on an actual requirement to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps in the methods described in embodiments of this application. The foregoing storage medium includes any medium that can store program code, such as a USB flash drive, a removable hard disk drive, a read-only memory ROM, a random access memory RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

**1.** A beam measurement method, comprising:

sending, by a first network device, first information to a second network device, wherein the first information indicates time-frequency resources of N first reference signals and time-frequency resources of K second reference signals, N is an integer greater than or equal to 1, and K is an integer greater than 1;

sending, by the first network device, second information to the second network device, wherein the second information indicates a first beam weight and M second beam weights, the second information further indicates that a beam of the second network device on the time-frequency resources of the N first reference signals is a beam corresponding to the first beam weight, the second information further indicates that beams of the second network device on the time-frequency resources of the K second reference signals are respectively beams corresponding to the M second beam weights, and M is an integer greater than 1 and less than or equal to K;

sending, by the first network device, the N first reference signals, and receiving N pieces of first channel information corresponding to the N first reference signals;

sending, by the first network device, the K second reference signals, and receiving K pieces of second channel information corresponding to the K second reference signals; and

sending, by the first network device, third information to the second network device, wherein the third information indicates a third beam weight, the third beam weight is determined based on the N pieces of first channel information and the K pieces of second channel information, and a beam corresponding to the third beam weight is a beam used by the second network device when the first network device communicates with a terminal device.

**2.** The method according to claim 1, wherein

the second information comprises information about an A×B-dimensional first weight matrix, and the first beam weight is determined based on the information about the A×B-dimensional first weight matrix, wherein A is a quantity of horizontal transmit ports of the second network device, B is a quantity of vertical transmit ports of the second network device, any element in the A×B-dimensional first weight matrix has limited P values, and P is an integer greater than or equal to 1; or

the second information comprises indication information, indicating that the first beam weight is preconfigured information.

3. The method according to claim 1 or 2, wherein a beam gain of the beam corresponding to the first beam weight is less than a first threshold.

4. The method according to any one of claims 1 to 3, wherein any one of the M second beam weights corresponds to a time-frequency resource of at least one second reference signal.

5. The method according to any one of claims 1 to 4, wherein

the second information comprises information about M A×B-dimensional second weight matrices, and the M second beam weights are determined based on the information about the M A×B-dimensional second weight matrices, wherein A is a quantity of horizontal transmit ports of the second network device, B is a quantity of vertical transmit ports of the second network device, any element in the A×B-dimensional second weight matrix has limited P values, and P is an integer greater than or equal to 1;
the second information comprises M groups of weight information, and the M second beam weights are determined based on the M groups of weight information, wherein any one group of the M groups of weight information comprises information about L spatial-domain bases and information about L weighting coefficients corresponding to the L spatial-domain bases, and L is an integer greater than 1; or
the second information comprises indication information, indicating that the M second beam weights are preconfigured information.

6. The method according to any one of claims 1 to 4, wherein the second information comprises M groups of weight information, wherein M1 groups of the M groups of weight information comprise information about L spatial-domain bases and information about L weighting coefficients corresponding to the L spatial-domain bases, M-M1 groups of the M groups of weight information comprise the information about L weighting coefficients, and L is an integer greater than 1.

7. The method according to claim 5 or 6, wherein beam gains of the beams corresponding to the M second beam weights in L directions are greater than a second threshold.

8. The method according to any one of claims 5 to 7, wherein a correlation between any two of the L spatial-domain bases is less than a third threshold.

9. The method according to any one of claims 5 to 8, wherein the L weighting coefficients comprise L amplitudes and L phases, wherein a value range of the L amplitudes is $[1/\sqrt{2},\ 1]$, and the L phases have limited P values.

10. The method according to any one of claims 1 to 9, wherein the first information, the second information, and/or the third information are/is carried in at least one of the following:
a radio resource control RRC message, a medium access control control element MAC CE, downlink control information DCI, or a physical downlink shared channel PDSCH.

11. A beam measurement method, comprising:

receiving, by a second network device, first information sent by a first network device, wherein the first information indicates time-frequency resources of N first reference signals and time-frequency resources of K second reference signals, N is an integer greater than or equal to 1, and K is an integer greater than 1;
receiving, by the second network device, second information sent by the first network device, wherein the second information indicates a first beam weight and M second beam weights, the second information further indicates that a beam of the second network device on the time-frequency resources of the N first reference signals is a beam corresponding to the first beam weight, the second information further indicates that beams of the second network device on the time-frequency resources of the K second reference signals are respectively beams corresponding to the M second beam weights, and M is a positive integer greater than 1 and less than or equal to K; and
receiving, by the second network device, third information sent by the first network device, wherein the third information indicates a third beam weight, the third beam weight is determined based on N pieces of first channel information corresponding to the N first reference signals and K pieces of second channel information corresponding to the K second reference signals, and a beam corresponding to the third beam weight is a beam used by the second network device when the first network device communicates with a terminal device.

12. The method according to claim 11, wherein

the second information comprises information about an A×B-dimensional first weight matrix, and the first beam weight is determined based on the information about the A×B-dimensional first weight matrix, wherein A is a quantity of horizontal transmit ports of the second network device, B is a quantity of vertical transmit ports of the second network device, any element in the A×B-dimensional first weight matrix has limited P values, and P is an integer greater than or equal to 1; or
the second information comprises indication information, indicating that the first beam weight is preconfigured information.

13. The method according to claim 11 or 12, wherein a beam gain of the beam corresponding to the first beam weight is less than a first threshold.

14. The method according to any one of claims 11 to 13, wherein any one of the M second beam weights corresponds to a time-frequency resource of at least one second reference signal.

15. The method according to any one of claims 11 to 14, wherein

the second information comprises information about M A×B-dimensional second weight matrices, and the M second beam weights are determined based on the information about the M A×B-dimensional second weight matrices, wherein A is a quantity of horizontal transmit ports of the second network device, B is a quantity of vertical transmit ports of the second network device, any element in the A×B-dimensional second weight matrix has limited P values, and P is an integer greater than or equal to 1;
the second information comprises M groups of weight information, and the M second beam weights are determined based on the M groups of weight information, wherein any one group of the M groups of weight information comprises information about L spatial-domain bases and information about L weighting coefficients corresponding to the L spatial-domain bases, and L is an integer greater than 1; or
the second information comprises indication information, indicating that the M second beam weights are preconfigured information.

16. The method according to any one of claims 11 to 14, wherein the second information comprises M groups of weight information, wherein M1 groups of the M groups of weight information comprise information about L spatial-domain bases and information about L weighting coefficients corresponding to the L spatial-domain bases, M-M1 groups of the M groups of weight information comprise the information about L weighting coefficients, and L is an integer greater than 1.

17. The method according to claim 15 or 16, wherein beam gains of the beams corresponding to the M second beam weights in L directions are greater than a second threshold.

18. The method according to any one of claims 15 to 17, wherein a correlation between any two of the L spatial-domain bases is less than a third threshold.

19. The method according to any one of claims 15 to 18, wherein the L weighting coefficients comprise L amplitudes and L phases, wherein a value range of the L amplitudes is $[1/\sqrt{2},\ 1]$, and the L phases have limited P values.

20. The method according to any one of claims 11 to 19, wherein the first information, the second information, and/or the third information are/is carried in at least one of the following:
a radio resource control RRC message, a medium access control control element MAC CE, downlink control information DCI, or a physical downlink shared channel PDSCH.

21. A beam measurement method, comprising:

receiving, by a terminal device, N first reference signals, and sending N pieces of first channel information corresponding to the N first reference signals, wherein N is an integer greater than or equal to 1; and

receiving, by the terminal device, K second reference signals, and sending K pieces of second channel information corresponding to the K second reference signals, wherein K is an integer greater than 1, wherein a beam on time-frequency resources of the N first reference signals is a beam corresponding to a first beam weight, beams on time-frequency resources of the K second reference signals are respectively beams corresponding to M second beam weights, and M is an integer greater than 1 and less than or equal to K.

22. The method according to claim 21, wherein

the first beam weight is determined based on information about $A \times B$-dimensional first weight matrix, wherein A is a quantity of horizontal transmit ports of the second network device, B is a quantity of vertical transmit ports of the second network device, any element in the $A \times B$-dimensional first weight matrix has limited P values, and P is an integer greater than or equal to 1; or
the first beam weight is preconfigured information.

23. The method according to claim 21 or 22, wherein

the M second beam weights are determined based on information about M $A \times B$-dimensional second weight matrices, wherein A is a quantity of horizontal transmit ports of the second network device, B is a quantity of vertical transmit ports of the second network device, any element in the $A \times B$-dimensional second weight matrix has limited P values, and P is an integer greater than or equal to 1;
the M second beam weights are determined based on M groups of weight information, wherein any one group of the M groups of weight information comprises information about L spatial-domain bases and information about L weighting coefficients corresponding to the L spatial-domain bases, and L is an integer greater than 1; or
the M second beam weights are preconfigured information.

24. A communication apparatus, comprising a module or a unit configured to perform the method according to any one of claims 1 to 10, the method according to any one of claims 11 to 20, or the method according to any one of claims 21 to 23.

25. A communication apparatus, comprising a processor, wherein when the processor invokes a computer program or instructions in a memory, the method according to any one of claims 1 to 10, the method according to any one of claims 11 to 20, or the method according to any one of claims 21 to 23 is performed.

26. A communication apparatus, comprising a logic circuit and an interface, wherein

the logic circuit is coupled to the interface; and
the interface is configured to input to-be-processed data, the logic circuit processes the to-be-processed data according to the method according to any one of claims 1 to 10, the method according to any one of claims 11 to 20, or the method according to any one of claims 21 to 23, to obtain processed data, and the interface is configured to output the processed data.

27. A computer-readable storage medium, wherein:
the computer-readable storage medium is configured to store instructions or a computer program; and when the instructions or the computer program is executed, the method according to any one of claims 1 to 10, the method according to any one of claims 11 to 20, or the method according to any one of claims 21 to 23 is implemented.

28. A computer program product, comprising instructions or a computer program,
wherein
when the instructions or the computer program is executed, the method according to any one of claims 1 to 10, the method according to any one of claims 11 to 20, or the method according to any one of claims 21 to 23 is performed.

29. A communication system, comprising the communication apparatus according to claim 24, the communication apparatus according to claim 25, or the communication apparatus according to claim 26.

30. A communication system, comprising a first network device, a second network device, and/or a terminal device, wherein
the first network device is configured to perform the method according to any one of claims 1 to 10, the second network device is configured to perform the method according to any one of claims 11 to 20, and the terminal device is configured to perform the method according to any one of claims 21 to 23.

[FIG. 1]

[FIG. 2]

[FIG. 3]

(a)                    (b)

[FIG. 4]

[FIG. 5]

| gNB | IRS | UE |
|---|---|---|

Configure a plurality of sets of CSI-RSs

Indicate to generate multi-peak measurement beams on specific Q sets of CSI-RSs

Deliver multi-peak measurement beam weights to be effective

Specific Q sets of CSI-RSs

IRS multi-peak measurement beams

CSI measurement results

Other sets of CSI-RSs

IRS omnidirectional beams

CSI measurement results

Determine, based on a plurality of sets of CSI measurement results, an optimum beam corresponding to the UE served by the IRS

Deliver an optimum beam weight

[FIG. 6]

First round  Second round  Third round  Fourth round

[FIG. 7]

Expected multi-peak beam weight φ

+Random phase perturbation φ^γ

Plurality of initial random phases φ

Antenna domain $u_0\exp(i\varphi)$

FFT

Beam domain $U\exp(i\Phi)$

+Non-ideal 2-bit quantization

Replaced with a target amplitude $u_0$ in antenna domain

Replaced with a target amplitude $U_0$ in beam domain

+Impact of a directivity pattern of an element

Antenna domain $u\exp(i\varphi)$

IFFT

Beam domain $U_0\exp(i\Phi)$

[FIG. 8]

Communication apparatus 80

801
Transceiver unit

802
Processing unit

[FIG. 9]

Communication apparatus 90

901
Communication interface

902
Processor

[FIG. 10]

Chip 100

Memory 1003 ⟷ Processor 1001

Interface 1002

## INTERNATIONAL SEARCH REPORT

| International application No. |
| --- |
| **PCT/CN2023/137709** |

### A. CLASSIFICATION OF SUBJECT MATTER

H04W 24/08(2009.01)i

According to International Patent Classification (IPC) or to both national classification and IPC

### B. FIELDS SEARCHED

Minimum documentation searched (classification system followed by classification symbols)

IPC:H04L,H04W,H04Q

Documentation searched other than minimum documentation to the extent that such documents are included in the fields searched

Electronic data base consulted during the international search (name of data base and, where practicable, search terms used)

3GPP, CNTXT, WPABSC, WPABS, DWPI, ENTXTC, ENTXT: 波束, 测量, 时频, 资源, 权值, 矩阵, 权重, 加权, 垂直, 水平, 智能反射面, IRS, intelligent reflecting surface, beam, measurement, time frequency, resource, weight, matrix, vertical, horizontal

### C. DOCUMENTS CONSIDERED TO BE RELEVANT

| Category* | Citation of document, with indication, where appropriate, of the relevant passages | Relevant to claim No. |
| --- | --- | --- |
| X | US 2018069613 A1 (CHINA ACADEMY OF TELECOMMUNICATIONS TECHNOLOGY) 08 March 2018 (2018-03-08) description, paragraphs [0006]-[0083] | 21, 24-30 |
| A | US 2018069613 A1 (CHINA ACADEMY OF TELECOMMUNICATIONS TECHNOLOGY) 08 March 2018 (2018-03-08) description, paragraphs [0006]-[0083] | 1-20, 22-23 |
| A | SPREADTRUM COMMUNICATIONS. "Discussion on multi-beam operation" *3GPP TSG RAN WG1 Meeting #95, R1-1813067,* 16 November 2018 (2018-11-16), pages 1-5 | 1-30 |
| A | CN 105684322 A (ALCATEL-LUCENT, INC.) 15 June 2016 (2016-06-15) entire document | 1-30 |
| A | WO 2018063436 A1 (INTEL IP CORP.) 05 April 2018 (2018-04-05) entire document | 1-30 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **20 February 2024** | **26 February 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/137709**

| Patent document cited in search report | | | Publication date (day/month/year) | Patent family member(s) | | | Publication date (day/month/year) |
|---|---|---|---|---|---|---|---|
| US | 2018069613 | A1 | 08 March 2018 | EP | 3280070 | A1 | 07 February 2018 |
| | | | | WO | 2016155416 | A1 | 06 October 2016 |
| | | | | CN | 106160821 | A | 23 November 2016 |
| CN | 105684322 | A | 15 June 2016 | WO | 2015062768 | A1 | 07 May 2015 |
| | | | | US | 2016301506 | A1 | 13 October 2016 |
| | | | | TW | 201521374 | A | 01 June 2015 |
| | | | | KR | 20160085810 | A | 18 July 2016 |
| | | | | EP | 2869477 | A1 | 06 May 2015 |
| | | | | JP | 2017500826 | A | 05 January 2017 |
| WO | 2018063436 | A1 | 05 April 2018 | | None | | |

Form PCT/ISA/210 (patent family annex) (July 2022)

**REFERENCES CITED IN THE DESCRIPTION**

**Patent documents cited in the description**

- CN 202211697839